# EUROPEAN PATENT APPLICATION

(11) **EP 4 321 834 A1**
(43) Date of publication of application: **14.02.2024**
(21) Application number: 22275107.5
(22) Date of filing: 10.08.2022
(51) Int. Cl.: G01B 5/008, G01B 21/04, B23Q 16/02, B23Q 16/08

(54) **INDEXED ARTICULATED JOINT COMPRISING A SENSOR FOR ESTABLISHING A STATE OF ENGAGEMENT AND ASSOCIATED METROLOGY APPARATUS**

(71) Applicant: Renishaw PLC, Wotton-under-Edge, Gloucestershire GL12 8JR (GB)
(72) Inventor: BUTTER, Andrew Geoffrey, Wotton-under-Edge, GL12 8JR (GB); HOY, Benjamin, George, Wotton-under-Edge, GL12 8JR (GB)
(74) Representative: Rolfe, Edward William

(57) **Abstract**

An apparatus comprising first and second relatively reorientable members and an indexer arrangement which is configured to provide a plurality of angularly indexed lockable positions of the first and second members about a first axis. The indexer arrangement comprises: i) a series of features provided on the first member, said series of features extending annularly around the first axis; and ii) at at least three discrete annularly-spaced locations on the second member, an engagement feature is provided which is configured to intermesh with a subset of said features on the first member when in the locked state thereby providing, at each indexed position, a stable, repeatable relative rest position of the first and second members. The apparatus further comprises at least a first non-contact sensor mounted to the second member, the non-contact sensor being configured to sense a region on the first member and thereby provide a signal dependent on the spatial configuration of the first and second members when in their locked state.

## Description

The present invention relates to an indexed articulated joint, in particular one used in a high precision metrology apparatus. For example, in one particular embodiment, the invention relates to an indexed articulated joint for an articulated head which is configured to support a measurement probe on a coordinate positioning apparatus such that the measurement probe can be arranged at a plurality of different rotational orientations.

As is well known in the field of coordinate positioning apparatus, in particular in the field of coordinate measuring machines (CMMs), an articulated head (or rotary table) for a measurement probe (or object) comprises articulatable members which facilitate reorientation of a measurement probe (or object) mounted thereon about at least one axis of rotation. Typically, an articulated head will provide two orthogonal axes of rotation, although it is possible that fewer or more axes of rotation are provided. Typically, a rotary table will provide one axis of rotation.

US5185936 describes an articulated head with one axis of rotation and EP2889573 and WO2006/079794 describe articulated heads which provide two orthogonal axes of rotation. As described in these documents, it is also known to provide articulated heads with an indexing arrangement which enable the relatively rotatable parts of the articulated head to be locked into a defined, indexed position. Indexing arrangements can be provided by providing two sets of intermeshing members, one on each of the relatively rotatable members. When the intermeshing members are engaged, they lock so as to present relative rotation of the rotatable members. When the intermeshing members are disengaged, the rotatable members are free to rotate relative to each other such that they (and a measurement probe mounted thereon) can be repositioned to a new orientation (e.g. under the control of a potentiometer or encoder as described in WO2006/079794) before being reengaged so as to lock the rotatable members (and a measurement probe mounted thereon) at the new orientation. A measurement operation can then take place with the measurement probe being held at a defined, known, rotational orientation. Renishaw plc sells such an indexed articulated under the product name PH10, wherein the indexing arrangement comprises a series of balls on one of the rotatable members and three pairs of cylindrical "rollers" on the other member. A potentiometer, mounted to the member having the three cylindrical rollers engages (via a series of gear members) the member having the series of balls and uses the output of the potentiometer when the members are unlocked such that the relative position of the members can be monitored and controlled so as to ensure that they are positioned at the desired relative orientation before they are locked together.

The present invention relates to an improved indexed articulated joint. In particular, the present invention has been found instrumental in facilitating a high-performance, indexed, articulated joint, e.g., where the desired repeatability of the indexed positions is 100 nm (nanometres) or less.

According to a first aspect of the invention there is provided an apparatus comprising first and second relatively reorientable members and an indexer arrangement which is configured to provide a plurality of angularly indexed lockable positions of the first and second members about a first axis (of rotation), in which the indexer arrangement comprises: i) a series (e.g. a continuous series) of features provided on the first member, said series of features extending annularly around the first axis; and ii) at a plurality of (e.g. at at least three) discrete annularly-spaced (around the first axis) locations on the second member, an engagement feature is provided which is configured to intermesh with a subset of said features on the first member when in the locked state thereby providing, at each indexed position, a stable, (e.g. kinematic) repeatable relative rest position of the first and second members; in which the apparatus further comprises at least a first non-contact sensor mounted to the second member (i.e. so as to be rotationally fixed thereto), the first non-contact sensor being configured to sense a region on the first member and thereby provide a signal dependent on the spatial configuration of the first and second members when in their locked state.

As described in more detail below in connection with specific embodiments of the invention, the inventors identified that there can be significant advantages to placing the non-contact sensors (which measure of the spatial configuration of the first and second members) on the second member as opposed to on the first member. In particular, the measure of the spatial configuration of the first and second members can be less error prone, or at least any errors in said measure can be more predictable and therefore more easily compensated for.

The first and second relatively reorientable members could be referred to as a pair of relatively reorientable members, e.g. a first pair of relatively reorientable members.

The material of at least those parts of the first and second members that, at each indexed position, mechanically link said first non-contact sensor on the second member and said region on the first member, and thereby dictate the relative spatial configuration thereof, can have a CTE of at least 2ppm/°C. Whilst materials having a CTE of less than 2ppm/°C are known and could be used, such materials can be expensive and/or can have other inappropriate properties which render it unsuitable for use in the desired application (e.g. the material can be too soft).

The first non-contact sensor can be positioned such that the radial line on which its sensing window resides is within +/-15° of the radial line on which a first of the engagement features of the second member resides, preferably within +/-10° of the radial line on which a first of the engagement features of the second member resides, more preferably within +/-5° of the radial line on which a first of the engagement features of the second member resides, especially preferably within +/-1° of the radial line on which a first of the engagement features of the second member resides.

The first non-contact sensor could be configured to measure the relative spatial configuration of the first and second members in only one dimension, or could, for example, be configured to measure the relative spatial configuration of the first and second members at least two orthogonal dimensions, for instance three orthogonal dimensions. The first non-contact sensor could be configured to measure the relative height/separation (e.g. along the axis of rotation/first axis) of the first and second members.

Optionally, the first non-contact sensor can be configured to measure the relative configuration (e.g. lateral position and/or rotational orientation) of the first and second members in a plane which is perpendicular to the axis of rotation (i.e. the first axis). For instance, the first non-contact sensor could be configured to measure the relative lateral position of the first and second members (e.g. in at least one dimension which is perpendicular to the axis of rotation, for example in two orthogonal dimensions, which are perpendicular to the axis of rotation). In particular, for example, the first non-contact sensor can be configured to measure the relative rotational orientation of the first and second members about the first axis. Optionally, the at least one first non-contact sensor can be configured to measure a combination of the above-mentioned relative configurations.

As will be understood, the first non-contact sensor can be configured to provide a measure of the relative configuration of the first and second bodies (in a plane which is perpendicular to the axis of rotation) at a resolution finer than the indexing increment of the indexer arrangement, for example to a resolution least 5 times the indexing increment of the indexer arrangement, optionally at least 10 times the indexing increment of the indexer arrangement, for example at least 15 times the indexing increment of the indexer arrangement. Preferably, the first non-contact sensor enables the relative position of the first and second bodies to be established to within 50µm, for example to within 10µm, optionally to within 1µm, for instance to within 100nm, optionally within 10nm, for instance within 2nm.

The region on the first member that is sensed by the first non-contact sensor could comprise a scale member (e.g. a rotary scale member). Accordingly, the non-contact sensor and scale member could be what is commonly referred to as an "encoder apparatus", or "position encoder apparatus". In such a case, the non-contact sensor could be what is commonly referred to as a "readhead". The scale member can comprise a series of features which said first non-contact sensor/readhead can read to determine the relative position thereof. The scale member could comprise an incremental scale track (with or without one or more reference marks). An incremental scale track typically comprises a periodic series of features which form a signal at the non-contact sensor/readhead which changes with relative movement of the non-contact sensor/readhead and scale. In the case of an optical encoder apparatus, the signal could be a fringe field (e.g. an interference fringe) which moves with relative movement of the non-contact sensor/readhead and scale, or could, for example be one or more spots of lights which changes in intensity with relative movement of the non-contact sensor/readhead and scale. The scale member could comprise an absolute scale track. An absolute scale track typically comprises a non-periodic series of features which encode unique position information along the length of the track. The scale member can comprise more than one scale track, and optionally comprises a combination of incremental and absolute scale tracks. The scale member/series of features/one or more tracks thereof, can extend around said first axis. The non-contact sensor/readhead can read the scale member to determine/provide a direct measure of the relative position of the first and second members about the first axis.

The non-contact sensor could sense said region via one, or a combination, of optical, inductive, magnetic and capacitive means. Accordingly, the non-contact sensor could comprise an optical sensor, magnetic sensor, inductive sensor and/or capacitive sensor. Accordingly, in the case of an encoder apparatus, the encoder apparatus could comprise an optical, inductive, magnetic or capacitive encoder apparatus (any of which could use a combination of sensing technologies, e.g. it is known for an incremental optical encoder apparatus to comprise magnetic reference marks).

The first non-contact sensor need not necessarily be part of an encoder apparatus. Rather, the first non-contact sensor need not necessarily sense a scale member, and could, for example, sense a structural part of the first member. The first non-contact sensor could comprise a position sensitive device (PSD) the output of which is dependent on the relative spatial position of the first member and the second member when locked together. In another embodiment, the first non-contact sensor could comprise a height/separation sensor (e.g. an inductive, magnetic and/or capacitive sensor) configured to sense the height/separation of the sensor and the first body.

The apparatus can be configured such that in the event of the first and second members locking together at an indexed position, the first non-contact sensor is used to establish information about the state of engagement of the first and second bodies. For example, the signal provided by the first non-contact sensor can be used to establish information about the state of engagement of the first and second members.

The first non-contact sensor could be used to obtain a ("current") measure of the relative spatial configuration of the first and second members. Information obtained from said measure can be compared to calibration information. Said calibration information could have been obtained from at least one other (in other words previous) measure of the relative spatial configuration of the first and second members (e.g. taken by the first non-contact sensor) when the first and second members were locked at said indexed position at an earlier point in time (in other words, when the first and second members were previously locked at said indexed position). Said comparison can be performed in order to establish information about the state of engagement of the first and second members. Preferably, the calibration information was obtained from at least one other measure of the relative spatial configuration of the first and second members taken by the first non-contact sensor (e.g. when the first and second members were locked at said indexed position at an earlier point in time).

The first non-contact sensor can help to verify that the first and second members have locked together properly; for instance to verify that they have locked together at substantially the same relative configuration as at a previous/earlier point in time, e.g. during a calibration stage. Accordingly, the first non-contact sensor can help to verify the repeatability of the indexed position at which the first and second members are locked together.

The apparatus can be configured to react in a predetermined manner depending on the determined state of engagement of the first and second members, e.g. depending on the outcome of the above-mentioned comparison. For instance, if the determined state of engagement (e.g. the comparison) indicates that the first and second members have not properly locked together, the apparatus can be configured to react by causing the first and second members to unlock. Optionally, the apparatus can be configured to react by causing the first and second members to unlock and relock at the same indexed position. Optionally, this can comprise relocking the first and second bodies from a slightly different position (e.g. from a slightly different relative rotational orientation). Reacting in a predetermined manner could additionally or alternatively comprise logging and/or reporting (e.g. outputting to a controller device) an error or warning state.

As will be understood, references to "previous measure" and "previously locked at said indexed position" does not necessarily mean the latest, or most recent measurement, or the latest or most recent time they were locked at said indexed position. Rather, the terms "previous" and "previously" are used to mean at some earlier point in time. Accordingly, the first and second members might have been locked at said indexed position a plurality of times between the current time and the time at which the calibration information was obtained.

The apparatus can be configured such that it is determined that the first and second members have not locked properly together if the comparison indicates that the current relative spatial configuration of the first and second members in the indexed position differs from a relative spatial configuration of the first and second members represented by the calibration information, by more than a predetermined threshold. The predetermined threshold could be not more than 100µm (microns), for instance not more than 50µm, optionally not more 20µm, but could for instance be a small as not more than 1µm, for instance not more than 100nm (nanometres), not more than 50nm, or not more than 10nm.

As mentioned above, the first non-contact sensor could be a part (e.g. readhead) of an encoder apparatus. As also mentioned above, a scale track can comprise a series of features, for example a series of generally periodic features. A scale track can have a characteristic pitch distance (or "characteristic pitch angle" for some rotary systems, e.g. disc scale on which scale features are radially arranged). Signals from the non-contact sensor/readhead can be used to interpolate between scale pitch intervals to produce position measurements which have a much higher resolution than the scale pitch. (There are cases where the readhead produces a spatially periodic signal, and in some embodiments the readhead's signal period has a higher frequency (shorter wavelength) than the scale period. In these cases interpolation can still be used to produce position measurements which have a much higher resolution than signal period). The "information obtained from said measure" and the "calibration information" could comprise relative position information at a resolution much finer than the period of the scale. Such relative position information could be referred to as a "phase reading"; because the information relates to the "phase" position between the scale's periodic features. Accordingly, the "information obtained from said measure" and the "calibration information" could comprise phase readings. Accordingly, in such an embodiment, the apparatus could be configured such that in the event of the first and second members locking together at an indexed position, a phase reading obtained from the first non-contact sensor is compared to a phase reading which was obtained by the first non-contact sensor when the first and second members were locked at said indexed position at an earlier point in time, in order to establish information about the state of engagement of the first and second members.

It can be preferable that the apparatus comprises a second non-contact sensor configured to provide a signal dependent on the spatial configuration of the first and second members when in their locked state. Preferably the second non-contact sensor is mounted to the second member, and is configured to sense a region on the first member at a different annular position about the first axis to that sensed by the first non-contact sensor (and thereby provide a signal dependent on the spatial configuration of the first and second members when in their locked state). As will be understood, a further (e.g. a third) non-contact sensor configured to provide a signal dependent on the spatial configuration of the first and second members when in their locked state, can be provided. Further, (e.g. a third) non-contact sensor(s) can be particularly beneficial if the non-contact sensors comprise a height/separation sensor used to sense the height/separation of the sensor and the first body. For example, in such a case it can be beneficial to provide three height/separation sensors equiangularly around the axis of rotation. Preferably each height/separation sensor is configured that its sensor windows resides within +/-15° of the radial line on which its closest engagement feature of the second member resides.

All statements made above in connection with the first non-contact sensor can also apply to the second non-contact sensor (and any further non-contact sensors). Accordingly, the statements made above in connection with the type (e.g. whether it is a readhead of an encoder apparatus or another type of sensor such as a height/separation sensor), position (e.g. its position with respect to an engagement feature of the second member) and use of the first non-contact sensor can also apply to the second non-contact sensor. Accordingly, for example, with regard to the use of the second non-contact sensor, in embodiments in which there are provided at least first and second non-contact sensors, the apparatus could be configured such that in the event of the first and second members locking together at an indexed position, the first and second non-contact sensors are used to sense the first member and thereby provide signals dependent on the spatial configuration of the first and second members when in their locked state. The signals provided by the first and second non-contact sensors can be used in order to establish information about the state of engagement of the first and second members. For example, the first and second non-contact sensors could be used to obtain a measure of the relative spatial configuration of the first and second members. Information obtained from said measure can be compared to calibration information which was obtained from at least one other (in other words previous) measure of the relative spatial configuration of the first and second members (e.g. taken by the first and second non-contact sensors) when the first and second members were locked at said indexed position at an earlier point in time (in other words, when the first and second members were previously locked at said indexed position), in order to establish information about the state of engagement of the first and second members. Optionally, in accordance with the above description where the non-contact sensors are part of an encoder apparatus, the metrological apparatus could be configured such that in the event of the first and second members locking together at an indexed position, the first and second non-contact sensors can be configured to read a scale member (the same scale member or different scale members), and first and second phase readings obtained respectively from the first and second readheads are compared to respective first and second phase readings which were obtained by the first and second readheads when the first and second members were locked at said indexed position at an earlier point in time, in order to establish information about the state of engagement of the first and second members.

It can be preferable that the second non-contact sensor is configured to sense a region of the first member at a location about said first axis which is less than 180° from the location at which the at least one first non-contact sensor senses the first member, for instance, at a location which is between 45° and 135° from the location at which the at least one first non-contact sensor senses the first member, for example at a location which is between 115° and 125° from the location at which the at least one first non-contact sensor senses the first member, for instance at a location which is 120° from the location at which the at least one first non-contact sensor senses the first member. As described in more detail below, it might be preferable that the second non-contact sensor is configured to sense a region of the first member at a location which is 90 ° from the location at which the at least one first non-contact sensor senses the first member.

As mentioned above, the statements regarding the position of the first non-contact sensor also apply to the second non-contact sensor. Accordingly, for example the second non-contact sensor can be positioned such that the radial line on which its sensing window resides is within +/-15° of the radial line on which a second of the engagement features of the second member resides, preferably within +/-10° of the radial line on which a second of the engagement features of the second member resides, more preferably within +/-5° of the radial line on which a second of the engagement features of the second member resides, especially preferably within +/-1° of the radial line on which a second of the engagement features of the second member resides. However, this need not necessarily be the case and the second non-contact sensor could be deliberately placed such that that the radial line on which its sensing window resides is not within +/-15° of the radial line on which any of the engagement features of the second member resides. For example, it might be advantageous to locate the second non-contact sensor at substantially 90° to each other around the first axis in order to be able to extract the most accurate information about the spatial configuration of the first and second members in multiple (e.g. orthogonal) dimensions, and the second engagement feature might not be located at or near 90° around the first axis relative to the first engagement feature (e.g. they might be located 120° apart).

The region of the first member sensed by the second non-contact sensor does not need to be the same region as that sensed by the first non-contact sensor. For example, in the case the first and second non-contact sensors are parts (e.g. readheads) of an encoder apparatus and said region comprises a scale member, the second non-contact sensor could sense a different track on said scale member, or could even sense a different scale member. Furthermore, the first non-contact sensor could be part of an encoder apparatus (and therefore sense a scale member) whereas the second non-contact sensor is not part of an encoder apparatus (and therefore does not sense a scale member).

The indexer arrangement of the first and second members could be unlocked (or the intermeshed features thereof can be dis-engaged) by axial relative movement of the first and second members along the first axis in a first direction such that the first and second members are free to be relatively rotated about the first axis. The first and second members could be locked (or the intermeshable features thereof can be re-engaged) by axial relative movement of the first and second members along the axis in a second direction.

The apparatus can further comprise a motor (e.g. an electric motor) for driving the first and second members about the first axis when unlocked.

The apparatus can further comprise a primary encoder apparatus configured to monitor the relative rotational position of the first and second members about the first axis when unlocked. Optionally, in those embodiments in which the non-contact sensor is a part of an encoder apparatus (herein labelled a "secondary encoder apparatus"), the primary encoder apparatus could be same encoder apparatus as the non-contact sensor/secondary encoder apparatus. In other words, the non-contact sensor could be configured such that it can be used (and optionally, is used) to detect/monitor the relative rotational position of the first and second members about the first axis when unlocked. Optionally, the primary encoder apparatus could share some common parts with the non-contact sensor/secondary encoder apparatus (e.g. they could share the same scale, with the primary encoder apparatus comprising a different readhead to the first non-contact sensor/readhead). However, it can be preferred that the primary encoder apparatus is an entirely different encoder apparatus to the non-contact sensor/secondary encoder apparatus, comprising a different readhead and a different scale.

The apparatus can comprise a motor mechanism for actuating the first and second members between their locked and/or unlocked states (a "locking/unlocking" motor mechanism). The locking/unlocking motor mechanism can comprise a member (e.g. prop), actuatable by a motor so as to unlock the (indexer arrangement of the) first and second members (e.g. by separating them along the first axis). For example, the prop could be actuatable between a retracted configuration at which the first and second members are in their locked state, and an extended configuration at which the first and second members are held apart by the prop along the first axis such that the first and second members are unlocked thereby permitting relative rotation of the first and second members. For instance, the member body could comprise the prop, and the prop and the second member could be magnetically biased toward each other so as to magnetically retain the first and second members. A supplemental bias member (e.g. magnetic material) could be configured to bias the prop towards its retracted configuration.

For example, the first member (or in an alternative embodiment, the second member) could comprise a part (e.g. a prop) which, at least when in the unlocked configuration, is relatively rotatable with respect to the first (or second) member about the first axis, and is configured to engage and be rotationally fixed relative to the second (or first) member when the first and second member are unlocked and rotated relative to each other. The part could be actuatable (e.g. by a motor) between a retracted configuration at which the first and second member are in their locked state, and an extended configuration at which the first and second members are held apart by the part/prop along the first axis such that the first and second members are unlocked thereby permitting relative rotation of the first and second members. The primary encoder apparatus could comprise a readhead on one of the first (or second) member and the part, and a scale member on the other, such that the readhead provides a measurement of the relative rotational position of the first (or second) member and the part. The apparatus could be configured to control the rotation of the first and second members when unlocked using the output of the primary encoder apparatus. The part/prop could be coupled to the second member (or in the alternative embodiment, coupled to the first member) (e.g. via corresponding engagement features as described in more detail below) when in its extended configuration and decoupled from the second (first) member when in its retracted configuration.

The metrology apparatus could comprise a rotary table, comprising the indexed articulated joint, on which a workpiece to be inspected is mounted. The metrology apparatus can comprise a probe head comprising the indexed articulated joint. The probe head could be configured to support a measurement probe on a coordinate positioning apparatus such that the measurement probe can be arranged at a plurality of different indexed rotational orientations. Suitable measurement probes include contact and non-contact measurement probes. Suitable measurement probes include probes for measuring the dimensions of a workpiece. Suitable measurement probes include touch-trigger and also scanning or "analogue" measurement probes.

The metrology apparatus (e.g. rotary table/probe head) could be configured to be mounted on a positioning apparatus, in particular a coordinate positioning apparatus, for example a coordinate measuring machine (CMM). The metrology apparatus (e.g. rotary table/probe head) could be mounted on a positioning apparatus which is configured to facilitate repositioning of the metrology apparatus in at least two, for example, three orthogonal linear degrees of freedom. The metrology apparatus (e.g. rotary table/probe head) could be removably mounted to the positioning apparatus (e.g. to a z-column or a quill of a CMM) via one or more releasable fasteners, such as one or more bolts.

The metrology apparatus can comprise a memory device comprising the calibration information. The memory device could be located in a part of the apparatus separate from the indexed articulated joint (e.g. within a controller). Preferably, a part of the indexed articulated joint (e.g. the first or second body) comprises the memory device. In embodiments in which the apparatus comprises a probe head (or a rotary table), the probe head (or the rotary table) could comprise the memory device.

The metrology apparatus could comprise a processing device configured to perform the aforementioned comparison. The processing device could be located in a part of the apparatus separate from the indexed articulated joint (e.g. within a controller). Optionally, a part of the indexed articulated joint (e.g. the first or second member) comprises the processing device. In embodiments in which the apparatus comprises a probe head (or a rotary table), the probe head (or the rotary table) could comprise the processing device.

Accordingly, the apparatus can be configured such that the aforementioned information about the state of engagement (e.g. said comparison) is performed within the part of the metrology apparatus which comprises the indexed articulated joint itself (e.g. within the probe head or rotary table).

The calibration information could be stored in a look-up table. Optionally, the calibration information could be represented by a function. Accordingly, the aforementioned memory device could comprise a look-up table and/or a function containing/representing the calibration information. A look-up table could comprise calibration information for each of at least a subset of the possible indexed positions of the first and second bodies. A look-up table could comprise calibration information for each of the possible indexed positions of the first and second bodies. For instance, the look-up table could comprise at least one element/data-cell for each indexed position. Each element/data-cell can comprise calibration information for the indexed position the element/data-cell is associated with. The look-up table could comprise multiple elements/data-cells for each indexed position. This could be helpful in the event that there is more than one non-contact sensor.

The "information obtained from said measure" and the "calibration information" could comprise relative position information (e.g. as opposed to absolute position information).

The calibration information (e.g. the lookup table or function) could be updated over time. This could happen continuously or at regular intervals. This could be done as part of a dedicated calibration process, or it could be done during measurement operations. For example, each time the first and second members lock together at any given indexed position and the comparison indicates that the first and second members have properly locked together (e.g. the comparison indicates that the current relative spatial configuration of the first and second members in the indexed position does not differ from a relative spatial configuration of the first and second bodies represented by the calibration information, by more than a predetermined threshold), the information obtained from the measure provided by the first (and optionally second) non-contact sensor of the current relative spatial configuration of the first and second members could be used to update (e.g. could be stored) the calibration information (e.g. could be used to update/replace the information stored in the particular element/data-cell in the look-up table that is associated with the indexed position).

As will be understood, "information obtained from said measure" could mean that the information is obtained from the measurement obtained by the non-contact sensor by itself, or could mean that the information is obtained from the measurement obtained by the non-contact sensor and also from other sources of data too. Accordingly, the information need not necessarily be, or only be obtained/derived from, the measurement obtained by the non-contact sensor. Nevertheless, it could be preferred that the "information at least derived from said measure" is just the measurement obtained by the non-contact sensor. Accordingly, the "information obtained from said measure" could be the measurement obtained by the non-contact sensor, e.g. it could be just the output from the non-contact sensor.

Likewise, the "calibration information which was obtained from at least one other/previous measure of the relative spatial configuration of the first and second members" could mean that the calibration information is obtained from at least one other/previous measurement obtained by the non-contact sensor by itself, or could mean that the calibration information is obtained from the at least one other/previous measurement obtained by the non-contact sensor and also from other sources of data too. Accordingly, the calibration information need not necessarily be, or only be obtained/derived from, the at least one other/previous measurement obtained by the non-contact sensor. Nevertheless, it could be preferred that the "calibration information" is just a measurement obtained by the non-contact sensor at an earlier point in time. Accordingly, the "calibration information" could be a measurement obtained by the non-contact sensor, e.g. it could be just the output from the non-contact sensor.

Accordingly, the apparatus could be configured to compare a current measure of the relative spatial configuration of the first and second members obtained by the first (and optionally second) non-contact sensor, with an other/previous measure of the relative spatial configuration of the first and second members taken by the first (and optionally second) non-contact sensor when the first and second members were locked at said indexed position at an earlier point in time, in order to establish information about the state of engagement of the first and second members.

As will be understood, the intermeshing features of the indexer arrangement can provide a plurality of predetermined angularly indexed positions at which the first and second members can be locked relative to each other. The intermeshing features of the indexer arrangement can provide for an indexing increment of 10° or less, for instance an indexing increment of 5° or less, for example 4° or less. The intermeshing features of the indexer arrangement can provide for an indexing increment of at least 0.5°, for instance at least 1°. For example, the intermeshing features of the indexer arrangement can provide for an indexing increment of about 2.5°.

The apparatus can comprise a motor configured to drive the first and second members about the axis of rotation (the first axis) when the first and second members are unlocked (a "re-orientation" motor mechanism).

The series of features provided on the first member which are part of the indexer arrangement could comprise, a series of teeth, preferably tapered teeth. A tapered tooth in said series can comprise a projection having a straight or curved sides. For example, a tooth could have a spherical (e.g. hemi-spherical) shape, a cylindrical (e.g. semi-cylindrical) shape or a substantially triangular shape. The series of teeth could provide a face spline member. The apparatus can be configured such that when in the locked state (and for each of the possible indexed positions), the engagement features provided on the other of the second member engage with a subset of the series of teeth of first member at a plurality (e.g. three) discrete, equiangularly-spaced, locations.

An engagement feature of the second member can comprise one or more teeth. An engagement feature of the second member can comprise a single tooth only. Optionally, an engagement feature of the second member can comprise a plurality of teeth, e.g. a group of teeth (e.g. a small series of teeth, the series extending annularly around the first axis) arranged at different annular locations around the first axis. Such a group of teeth could comprise, for example, not more than 5 teeth, e.g. two, three or four teeth. Preferably the angle subtended by an arc defined by the first and last teeth in said group/series of teeth of an engagement feature is not greater than 25°, more preferably not greater than 20°, especially preferably not more than 10°, for instance not more than 5°.

As described above in connection with the teeth of the first member, the tooth/teeth of an engagement feature of the second member can comprise a tapered tooth/teeth. A tapered tooth can comprise a projection having a straight or curved sides. For example, a tooth could have a spherical (e.g. hemi-spherical) shape, a cylindrical (e.g. semi-cylindrical) shape or a substantially triangular shape.

The apparatus can be configured such that when in the locked state (and for each of the possible indexed positions), the features of the indexer arrangement on the first member and the engagement features on the second member provide for a kinematic mount/location/connection/coupling between the first and second members. As will be understood a kinematic mount is one which has elements on one part which are arranged to cooperate with elements on another part to provide highly repeatable positioning. The elements are arranged to cooperate with each other so as to constrain relative movement between the parts in all six degrees of freedom (i.e. three perpendicular linear degrees of freedom and three perpendicular rotational degrees of freedom), preferably by six points of contact or constraints. In one particular embodiment, the features on one of the members can be arranged to provide a pair of mutually converging surfaces at each of three spaced locations, in such a manner as to provide a total of six rigid points of contact with the features on the other member. This constrains the six possible degrees of freedom of one part relative to the other. Such a kinematic mount is sometimes known as a Boys support, and is described in, for example, H. J. J. Braddick, "Mechanical Design of Laboratory Apparatus", Chapman and Hall, London, 1960, pages 11-30. Further details of example configurations for providing such kinematic mount/location/connection are provided below.

The metrology apparatus can comprise a third member, and a second indexer arrangement can be provided which is configured to provide a plurality of angularly indexed positions for i) the third member and ii) either the first or second member (whichever it is mounted to) about a second axis (hereinafter referred to as "the second pair of relatively reorientable members"). The features described above in connection with the first and second members are equally applicable to the second pair of relatively reorientable members. Accordingly, for example there can be provided: a) a series of features provided on one of the second pair of relatively reorientable members, said series of features extending annularly around the second axis; and b) at at least three discrete annularly-spaced locations on the other of the second pair of relatively reorientable members, an engagement feature is provided, which is configured to intermesh with a subset of said series features when in the locked state thereby providing, at each indexed position, a stable, repeatable relative rest position of the second pair of relatively reorientable members. Furthermore, a first non-contact sensor can be provided and configured to provide a measure of the relative spatial configuration of the second pair of relatively reorientable members. Preferably, the first non-contact sensor is mounted on the member on which said engagement features is provided, and is configured to sense a region on the other member (on which the series of features is provided) and thereby provide a signal dependent on the spatial configuration of the second pair of relatively reorientable members when in their locked state.

As will be understood, references herein to "subset" means, in the mathematical sense, a "proper subset" (in that each engagement feature on the second member cannot and does not engage all of the features in said series of features on the first member).

Embodiments of the invention will now be described, by way of example only, with reference to the following drawings, in which:
Figure 1 illustrates an indexing head according to the present invention mounted on a coordinate measuring machine (CMM);
Figure 2 illustrates the indexing head of Figure 1 in isolation;
Figure 3 illustrates a cross-sectional view of the indexing head of Figure 1 when in its locked configuration;
Figure 4 illustrates a cross-sectional view of the indexing head of Figure 1 when in its unlocked configuration;
Figure 5a illustrates the indexing arrangement of the indexing head of Figure 1;
Figure 5b illustrates one part of the indexing arrangement of Figure 5a in isolation;
Figure 6 is a detail view of the indexing arrangement shown in Figure 5a;
Figures 7a, 7b and 7c illustrate a single tooth of the part of the indexing arrangement shown in Figure 5b;
Figure 8 is an exploded view of the different parts of the indexing and unlocking mechanisms of the indexing head of Figure 1;
Figures 9 and 10a show cut-away views of the different parts of the indexing and unlocking mechanisms of the indexing head of Figure 1;
Figure 10b shows the underside of one of the articulated parts of the indexing arrangement of the indexing head of Figure 1;
Figures 11a to 11d show schematic cross-sectional views of the different parts of the indexing and unlocking mechanisms of the indexing head of Figure 1 at different stages during an unlocking and locking operation;
Figures 12 to 15 show schematic cross-sectional views of the different parts of the indexing and unlocking mechanisms according to alternative embodiments, in particular with different magnet arrangements;
Figure 16 is a graph illustrating the prop force and holding force for the three ring-magnet embodiment of Figures 3, 4 and 11;
Figure 17 is a graph illustrating the prop force and holding force for the two ring-magnet embodiment of Figure 12;
Figure 18 is a graph illustrating the prop force and breakout torque for a two disc-magnet embodiment;
Figure 19 is a first isometric view of the indexing arrangement of the indexing head of Figure 1, along with the associated non-contact sensors;
Figure 20 is a second isometric view of the indexing arrangement of the indexing head of Figure 1, along with the associated non-contact sensors;
Figure 21 is a plan view of the first member of the articulated head, showing the relative positions of the non-contact sensors and the teeth of the indexing arrangement;
Figures 22a and 22b illustrate side sectional views of two different non-contact optical sensors for determining the spatial configuration of the first 102 and second 104 members;
Figures 23a and 23b illustrate side sectional views of a non-contact inductive sensor for determining the spatial configuration of the first 102 and second 104 members;
Figure 24 illustrates a partial plan view of the first member of the articulated head, showing an engagement feature of the indexing arrangement that comprises a plurality of teeth; and
Figure 25 is a cross-sectional view of the articulated head 100 taken in the Z-X plane with the first axis "D" and the second axis "E", both in unlocked configurations.

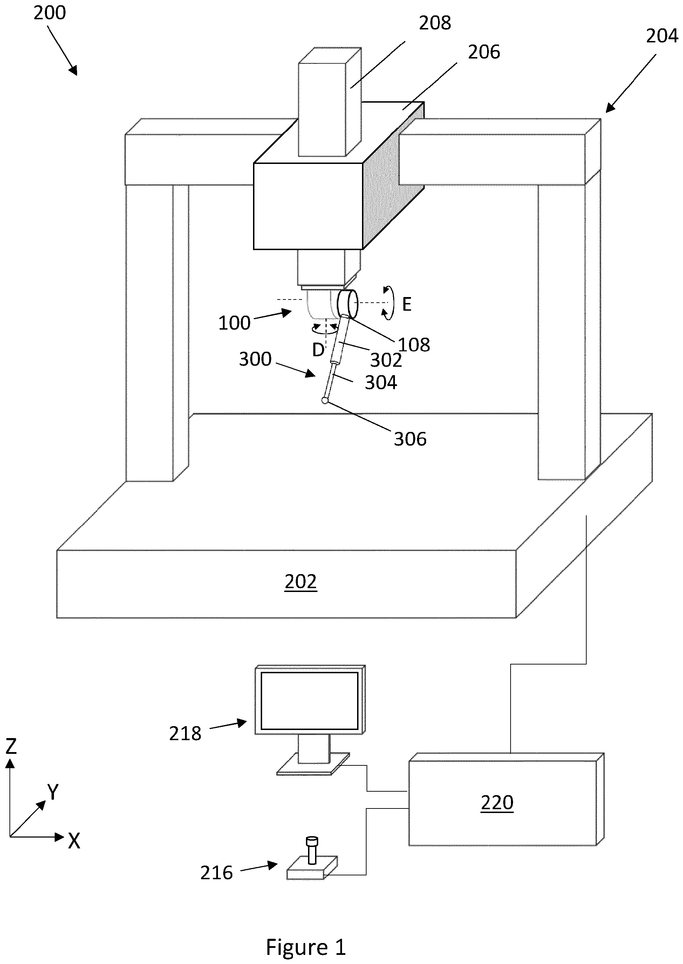

With reference to Figure 1 there is shown an articulated head 100 according to the present invention mounted on a positioning apparatus 200.

The positioning apparatus 200 comprises a movement structure, in this case in the form of a coordinate measuring machine ("CMM"). The CMM 200 comprises a base 202, supporting a frame 204 which in turn holds a carriage 206 which in turn holds a quill 208 (or "Z-column"). Motors (not shown) are provided to move the quill 208 along the three mutually orthogonal axes X, Y and Z (e.g. by moving the frame along the Y axis, and the carriage 206 along the X axis, and the quill 208 along the Z-axis).

The quill 208 holds the articulated head 100, which in turn holds a probe 300. In this embodiment, the articulated head 100 facilitates repositioning of the probe 300 mounted on it, about first and second rotational axes D, E as explained in more detail below.

The combination of the two rotational axes (D, E) provided by the articulated head 100 and the three linear (X, Y, Z) axes of translation of the CMM 200 allows the probe 300 to be moved/positioned in five degrees of freedom (two rotational degrees of freedom, and three linear degrees of freedom).

Although not shown, measurement encoders may be provided for measuring the relative positions of the base 202, frame 204, carriage 206, quill 208 and the parts of the articulated head 100 so that the position of the measurement probe 300 relative to a workpiece located on the base 202 can be determined.

A controller 220 is provided for controlling the operation of the CMM 200, such as controlling the position and orientation of the probe 300 within the CMM volume (either manually, e.g. via an input device such as joystick 216, or automatically, e.g. under the control of an inspection program) and for receiving information (e.g. measurement information) from the CMM 200. A display device 218 can be provided for aiding user interaction with the controller 220. The controller 220 could, for example, be a dedicated electronic control system and/or may comprise a personal computer.

In the embodiment shown, the probe 300 is a contact probe comprising a probe body 302 and a stylus 304. The stylus 304 has a spherical tip 306 for contacting a workpiece to be inspected and in this embodiment the stylus 304 is deflectable relative to the probe body 302. The contact probe 300 could be what is commonly referred to as a touch-trigger probe, or could be a scanning (or analogue) probe. As will be understood, other types of probes including non-contact probes could be mounted on the articulated head 100.

In the current embodiment, the articulated head 100 comprises a probe mount 108 for facilitating the swapping of different probes thereon. In particular, this could be a mount which facilitates auto-changing of probes to and from a rack within the CMM's operating volume. For instance, the probe mount 108 and probe body 302 can comprise magnets for retaining the probe on the mount.

It is possible for the articulated head 100 to comprise built-in sensor componentry for detecting the deflection of the stylus 304 of a contact probe mounted thereon. However, in the present embodiment, all such sensor componentry is provided within the body 302 of the probe 300 itself. The probe 300 is configured to send stylus-deflection signals to the controller 220. As is commonplace, this can be done by a contact signal interface between the probe 300 and probe mount 108, wherein such signals are then relayed to the controller 220 via the articulated head's 100 and CMM's 200 cabling. Such an interface can also be used to supply power to the probe 300. Accordingly, as will be understood, the articulated head 100 will itself have a signal interface with the quill 208 (e.g. one or more corresponding electrical contacts on the articulated head and quill) which can be used to relay probe signals as well as to receive power and motor control instructions so as to control the articulated head 100 (e.g. so as to control the operation of the electrically powered lock 190, 190' and drive 192, 192' motors described in more detail below). Accordingly, although not shown for simplicity of illustration, as will be understood, in the embodiments described, the CMM 200 and the articulated head 100 will comprise electrical wires for relaying signals from the articulated head 100 (e.g. probe signals, position information, error messages, etc), and/or for supplying power and instructions/signals to the articulated head 100 (e.g. for controlling the articulated head's motors so as to control the rotational position of the relatively rotatable members). As will be understood, in other embodiments, the articulated head could comprise one or more of its own power sources (e.g. one or more batteries), for powering the articulated head. As will also be understood, in other embodiments, the articulated head could communicate with the controller 220 wirelessly.

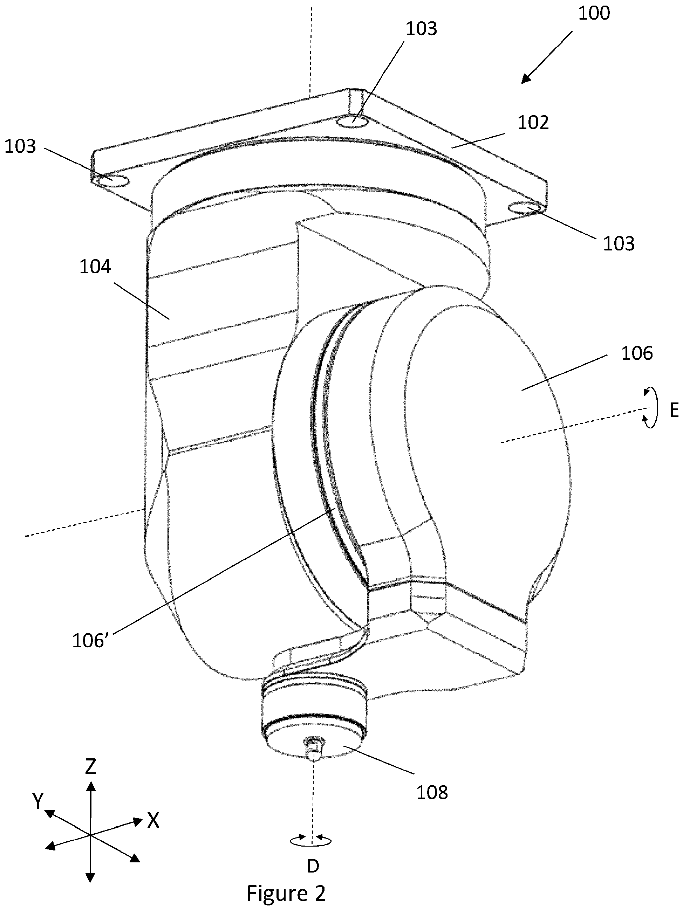

Referring now to Figures 2 to 24, the articulated head 100 will now be described in more detail.

As shown in Figure 2, the articulated head 100 comprises a first member 102 or "mounting plate", a second member 104 which is articulatable/rotatable relative to the first member 102 about a first axis of rotation "D", and a third member, in this embodiment in the form of a probe arm 106, which is articulatable/rotatable relative to the second member 104 about a second axis of rotation "E". The second axis of rotation "E" is orthogonal to the first axis of rotation "D". In the embodiment described, the first axis of rotation "D" is arranged parallel to the CMM's Z-axis, but this need not necessarily be the case.

The first member/mounting plate 102 comprises holes 103 through which bolts can pass so as to fasten the articulated head 100 to the quill 208 of the CMM 200. The probe arm 106 comprises a probe mount 108 on which a probe (such as the contact probe 300) can be interchangeably mounted.

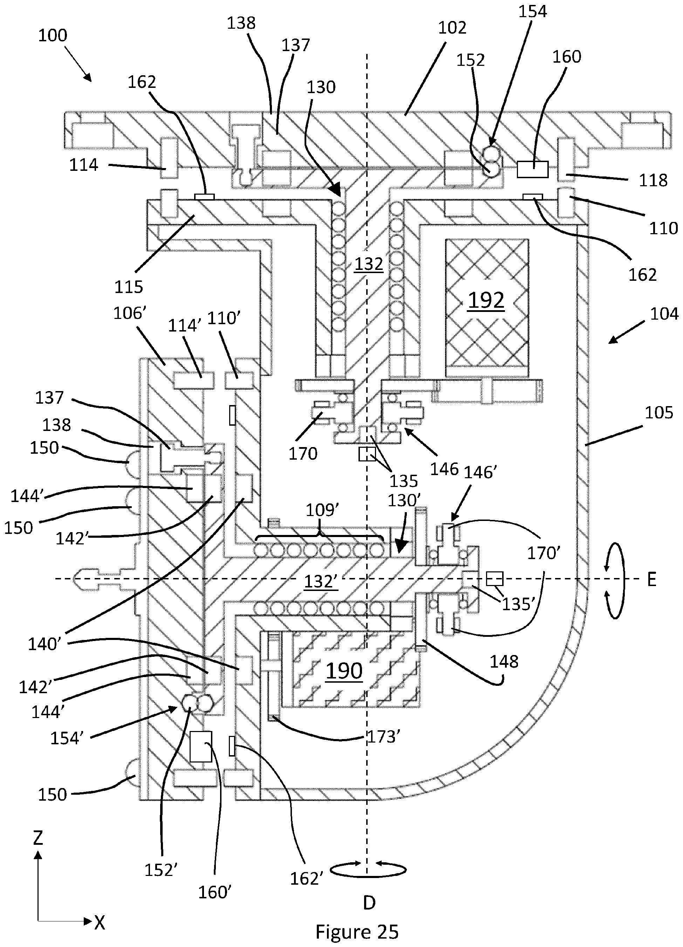

In an alternative embodiment, the probe arm 106 with its probe mount 108 could itself be an interchangeable member. For instance, rather than being a part of the articulated head 100, the probe arm 106 could be provided as part of the probe so that it can be (e.g. automatically) interchanged along with the probe. In this case, the third member of the articulated head 100 could comprise a mount member 106' for the probe/probe arm 106, the mount member 106' being articulatable/rotatable relative to the second member 104 about the second axis of rotation "E". The mount member 106' and probe arm 106 can be provided with cooperating mounting features, to enable the probe arm 106 to be detachably mounted to the mount member 106'. Such cooperating mounting features could comprise features 150 (see Figure 25) defining a kinematic mount, for example. One or more magnets could be provided for retaining the probe arm 106 on the mount member 106'.

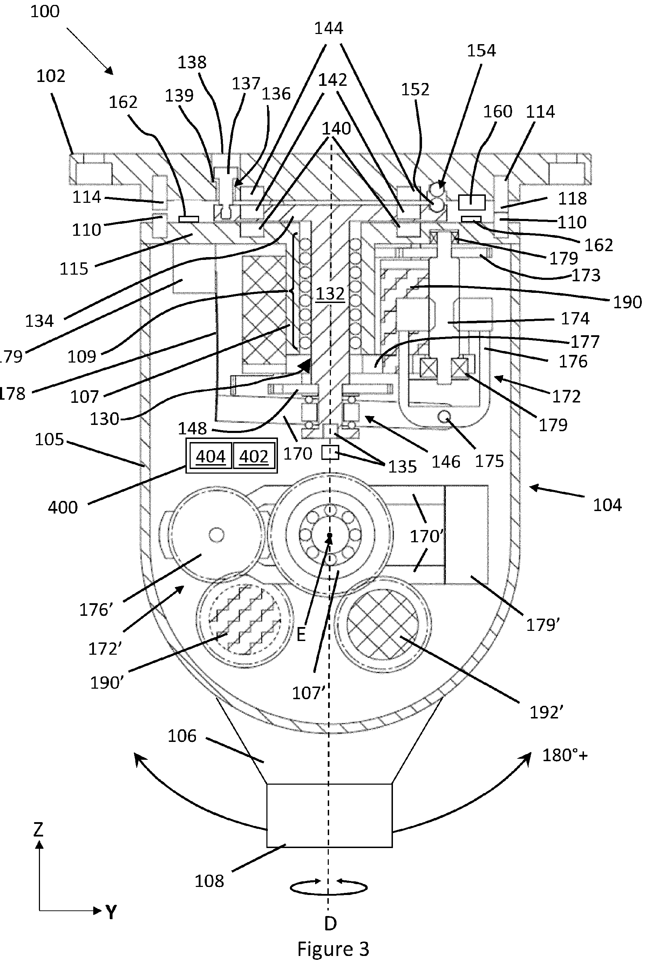

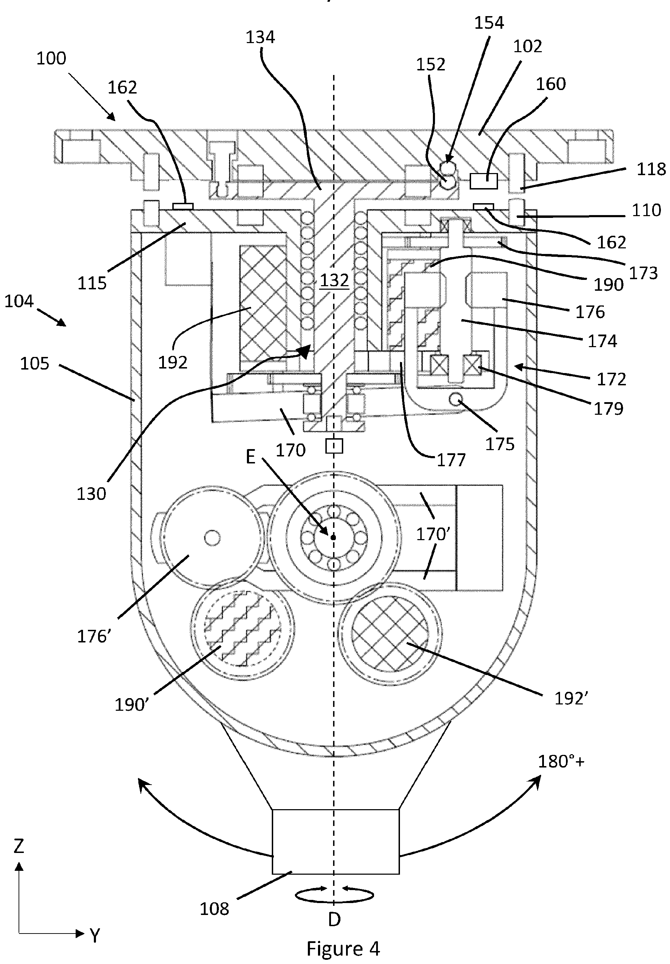

Figures 3 and 4 show a cross-sectional view of the articulated head 100 taken in the Z-Y plane, and Figure 25 shows a cross-sectional view of the articulated head 100 taken in the Z-X plane. Figures 3 and 4 are substantially the same and are common views of the same articulated head, but in Figure 3 the articulated head 100 is shown with the first member/mounting plate 102 and the second member 104 in their locked state and in Figure 4 the articulated head 100 is shown with the first member/mounting plate 102 and the second member 104 in their unlocked state. Many reference numerals are omitted from Figure 4 to aid viewing of the various features of the articulated head 100.

The locking/unlocking mechanisms, rotating mechanisms and indexing arrangements of the first axis "D" and second axis "E" (i.e. of the first member/mounting plate 102 and the second member 104) will now be explained. In this embodiment, the locking/unlocking mechanism and indexing arrangement of the second axis "E" (i.e. of the second member 104 and third member 106/106') is substantially the same (but arranged perpendicular to that of the first axis "D"). Accordingly, in this embodiment, the locking/unlocking mechanism, rotating mechanism and indexing arrangement of first "D" and second "E" axes have substantially identical parts. For the sake of brevity and clarity, the description below focusses primarily on the first axis "D", but as will be understood, much of the description of the first axis "D" is also applicable to the second axis "E", and the parts of the second axis "E" that are the same as the first axis "D" are labelled in the drawings with the same reference numeral as the first axis "D", but suffixed with a prime ' symbol. In this embodiment, the locking/unlocking of the first "D" and second "E" axes can be controlled/actuated independently of each other. In other words, the articulated head could be operated so as to unlock the first axis "D" but keep the second axis "E" locked, or vice versa. Of course, if desired, it is still possible to control the articulated head so as to unlock the first "D" and second "E" axis together/simultaneously. Furthermore, as will be understood, other configurations are possible, including those in which the locking/unlocking of the first and second axes cannot be controlled/actuated independently, e.g. as described in EP2889573 or US7213344.

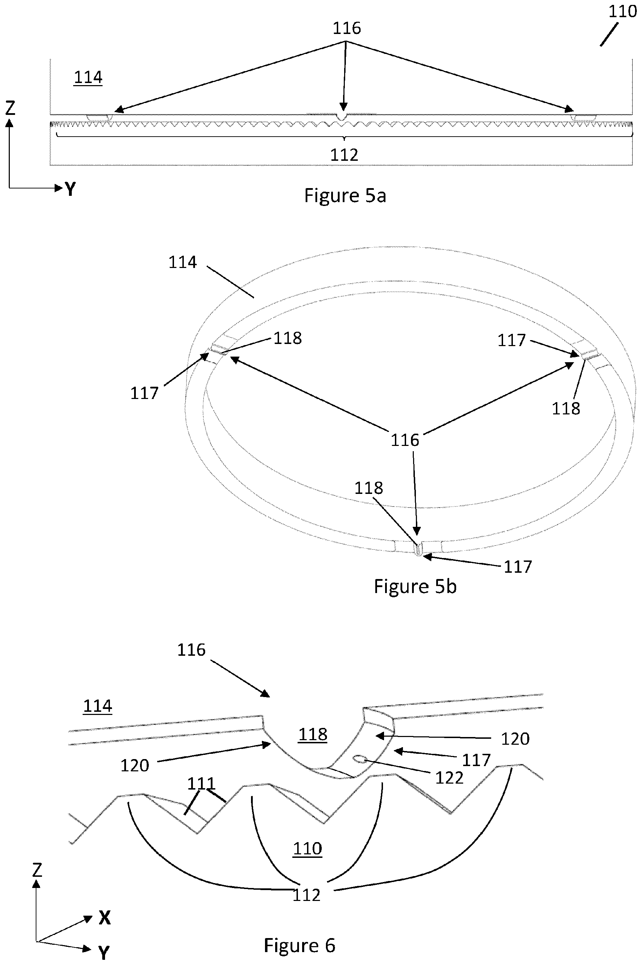

The indexing arrangement of the first axis "D" comprises an arrangement of mutually engageable features provided on the first member/mounting plate 102 and the second member 104. In particular, there is provided a first annular member 110 having a continuous series of tapered teeth 112 (e.g. see Figures 5a and 6 for detailed views). The teeth 112 are substantially radially extending, in that the extent of the teeth predominantly extends along the radial direction (with respect to the radius of the first annular member; and also the first axis "D"). Accordingly, in this embodiment, the first annular member 110 is in the form of a "face spline member" and will subsequently be referred to as such (note that in particular, in the embodiment described, the face spline member has the configuration of a Hirth joint member). The teeth of the face spline member 110 are radially elongate and have a generally tapered cross-sectional profile (taken perpendicular to their length). In this embodiment, each side 111 of a tooth 112 is substantially flat/planar, although this need not necessarily be the case (for instance they could be curved or crowned like the below described crowned tooth 118).

The indexing arrangement further comprises a second annular member 114 which has engagement features 117 configured to intermesh with the teeth 112 of the face spline member 110. The second annular member 114 has engagement features 117 configured to engage only a subset (i.e. in the mathematical a sense, a "proper subset") of the continuous series of teeth provided on the face spline member 110 (see Figures 5b and 6 for detailed views). Accordingly, instead of the second annular member 114 providing a continuous series of inter-engaging teeth, the second annular member 114 merely comprises engagement features 117 configured to intermesh with the teeth 112 of the face spline member 110 at three discrete, equiangularly-spaced (120°), locations 116. In this particular embodiment, the engagement feature 117 at each of said locations 116 comprises a single tooth 118, each of which is configured to nestle between and engage two adjacent teeth 112 of the face spline member 110. Each tooth 118 is radially elongate and has a generally tapered profile (taken perpendicular to their length) and thereby provides two curved engagement side surfaces 120 which are configured to engage the side surfaces 111 of the teeth 112 on the face spline member 110. Due to the engagement side surfaces 120 being curved, the teeth 118 could be described as "crowned" teeth 118.

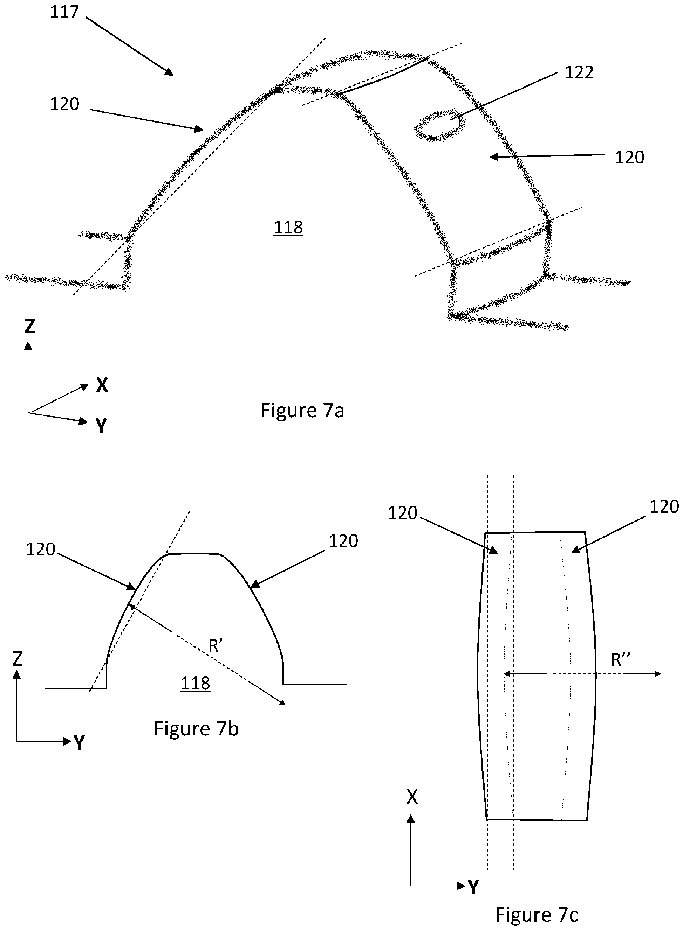

As illustrated in Figures 7a to 7c, the engagement side surfaces 120 of a crowned tooth 118 are curved along their length (in this embodiment along the radial dimension, or along the X-axis as shown in Figures 7a and 7c) as well as in their cross-sectional profile (taken perpendicular to their length/radial dimension, as shown in Figure 7b). Such a configuration (i.e. a crowned tooth 118 which engages flat/planar teeth 112 on the face spline member 110) ensures that each engagement side surface 120 of the crowned tooth 118 presents an apex region 122. It is this apex region 122 which will tend to engage with the side surfaces 111 of the teeth 112 on the face spline member 110. Providing an apex region has been found to provide for more repeatable seating position between the first annular member/face spline member 110 and the second annular member 114. This is because providing the apex region 112 means that for any given pair of teeth on the first annular member/face spline member 110 and the second annular member 114, it is significantly more likely that the teeth in said pair will engage at the same region on their side surfaces 111, 120, each time they come together (compared to if the side surfaces 111, 120 of the teeth on both the first annular member/face spline member 110 and second annular member 114 are both substantially flat/planar), thereby helping to ensure that the first annular member/face spline member 110 and the second annular member 114 seat together in the same position each time they come together at a given angular orientation.

As will be understood, the teeth of the indexing arrangement could be provided by other types of features. For example, the teeth on the second member 104 could comprise a series of spherical members extending annularly around the axis of rotation D (e.g. a "ring of balls") and the engagement features 117 could each comprise a pair of cylindrical members, e.g. like that described in WO2006/079794 or US5185936. However, the configuration described in the present embodiment has been found to provide a superior kinematic coupling between the first annular member/face spline member 110 and the second annular member 114 compared to other configurations. This is particularly the case when the indexing increment becomes small (e.g. smaller than 7.5°, and particularly less than 5°, for instance approaching 2.5°). This is because the smaller the indexing increment, the smaller the intermeshing features are. Not only can it be difficult to accurately manufacture and assemble a ring of balls of having sufficiently smaller diameter, but due to the very small point of contact between balls of very small diameter with corresponding cylindrical members, the Hertzian contact pressure would be extremely high, causing them to be overstressed and this in turn would result in undue wear and/or failure of the indexing arrangement.

For example, in the currently described embodiment, the first annular member/face spline member 110 and second annular member 114 have an outer diameter of 75mm, and are provided with teeth which are sized so as to provide a 2.5° indexing increment, and the articulated head 100 is configured such that when in the locked position the first annular member/face spline member 110 and second annular member 114 will be held together by a force of approximately 120N (Newtons). The radius of curvature R' of the crowned tooth taken in a plane perpendicular to its length (e.g. in the Z-Y plane of Figure 7b) is 1.8mm and the radius of curvature R" of the crowned tooth taken in a plane along its length (e.g. in the Z-X plane of Figure 7c) is 23mm. In contrast, if a spherical ball were used in place of the crowned tooth, the ball would have to have a radius of curvature of <0.75mm in order to fit between the teeth 112 of the first annular member/face spline member. Not only would it be difficult to assemble such small balls into the articulated head, but they would provide an incredibly small contact point, resulting in extremely high Hertzian contact pressure.

As will be understood, the same effect can be achieved by making the teeth 112 on the first annular member/face spline member 110 crowned and providing the teeth 118 on the second annular member 114 with flat sides, although this can be more difficult to manufacture. Alternatively, the teeth 112, 118 on both the first annular member/face spline member 110 and the second annular member 114 could be crowned, although along with increased manufacturing difficulty, the teeth dimensions would need to be adjusted (in particular increased) in order to avoid undesirable Hertzian contact pressures.

In the embodiment described above, the teeth 112 are provided on an annular member 110 which is then attached to the body 105/top face 115 of the second member 104, and also the teeth 118 are provided on an annular member 114 which is then attached to the first member 102. However, this need not necessarily by the case; e.g. the teeth 112 could be provided directly on the body 105/top face 115 of the second member 104 and/or the teeth 118 could be provided directly on the first member/mounting plate 102.

The mechanism for locking and unlocking the indexing arrangement of the first axis "D" will now be described. In summary, in the particular embodiment described, the locking/unlocking mechanism relies solely on magnets to provide the retaining force between the first annular member/face spline member 110 and the second annular member 114 having the crowned teeth 118, and a motor-driven actuator is used to push the first member/mounting plate 102 and the second member 104 away from each other so as to separate the first annular member/face spline member 110 and the second annular member 114 having the crowned teeth 118. This mechanism will be described in more detail immediately below.

In the embodiment described, the locking/unlocking mechanism comprises a trio of stacked magnets. In particular a first 140 ring magnet is provided on the top face 115 of a housing 105 of the second member 104, a second 142 ring magnet is provided on the contact plate 134 of a prop 130 (described in more detail below), and a third magnet 144 is provided on the first member/mounting plate 102. The first 140, second 142 and third 144 ring magnets are identical in shape and size, are stacked so as to be co-axial with each other, and are arranged so that both the first 140 and third 144 ring magnets attract the second magnet 142 which is sandwiched between them. The poles of the ring magnets are axially arranged (i.e. such that the two magnetic poles are on the top and bottom of the flat surfaces of the rings). In particular, the ring magnets are configured such that the north pole of the first magnet 140 faces the south pole of the second 142 magnet, and such that the north pole of the second magnet 142 faces the south pole of the third magnet 144. As explained in more detail below, when in the locked and unlocked positions, the second member 104 is retained solely by magnetic attraction, and in particular solely by the magnetic attractive forces between the third 144, second 142 and first 140 magnets.

The locking/unlocking mechanism comprises a prop 130 which comprises a shaft 132 and a "head" or "contact plate" 134. The shaft 132 of the prop 130 is supported within a linear cylindrical bearing housing 107 provided by the top face 115 member of the housing 105 of the second member 104. A bearing (in this case an array of ball-bearings 109) is provided between the shaft 132 and the cylindrical bearing housing 107 so as to facilitate relative linear and rotational motion between the shaft 132 and the cylindrical bearing housing 107 (i.e. along and about the first axis "D"). The contact plate 134 comprises a radially extending face which is sandwiched between the bodies of the first member/mounting plate 102 and the second member 104.

A motor-driven lever 170 is provided for effecting said linear/axial movement of the shaft 132 along the first axis "D". The lever 170 is pivotally mounted toward its first end to a flexure 178 which is anchored to the housing 105 of the second member (in this embodiment to the top plate 115) via a mounting block 179. The lever 170 is attached toward its second end to a lead screw mechanism 172 which is configured to raise and lower second end of the lever 170. The lever is attached, at a point between its first and second ends, to the end of shaft 132 that is distal to the contact plate 134 via a bobbin 146 (which facilitates relative rotation of the shaft 132 and lever 170). An electrically powered lock motor 190 is configured to drive the lead screw mechanism 172. In particular, the lock motor 190 is configured to drive a first gear wheel 171 which is configured to engage and turn a second drive gear wheel 173 which turns a lead screw 174. When the lead screw 174 is turned, it causes a nut 176 (which is attached to the lever 170 via a pin 175) to travel axially along the lead screw 174. The lead screw 174 is also anchored to the housing 105 of the second member (in this embodiment to the cylindrical bearing housing 107) via a mounting bracket 177 and bearings 179 such that it can rotate about its axis of rotation, but such that it is fixed relative to the housing 105 of the second member in the Z-dimension (as shown in Figures 3 and 4).

It can be advantageous if the drive mechanism for the prop 130 resists back driving (in other words, it is not easily manually back-driven), especially if the three magnet design described below is not adopted. This is because a drive mechanism which is not easily manually back-driven will tend to hold its position even when the motor/power source is not activated if the net external force on the prop 130 is sufficiently low. This can avoid the need to servo the drive mechanism/motor to hold a fixed position and can therefore reduce the power consumption of the articulated head. Accordingly, this can reduce the amount of heat generated by the drive mechanism/motor, which in turn can improve the metrological performance of the articulated head by reducing thermal distortions. A lead screw mechanism with a high gear pitch is one example of a drive mechanism which is not easily back-driven.

As explained in more detail below an electrically powered drive motor 192 is provided which has a gear arrangement (not shown) which is configured to engage and drive a drive gear 148 provided on the shaft 132 towards its end that is distal to the contact plate 134, and can be operated to cause the housing 105 of the first member 104 (and everything anchored to it) to rotate/spin around the shaft 132 about the first axis "D". A first (or "primary") rotary encoder apparatus 135 (e.g. a magnetic absolute rotary encoder apparatus) is provided for measuring/monitoring the relative angular position of the housing 105 of the first member 104 and the shaft 132 about the first axis "D".

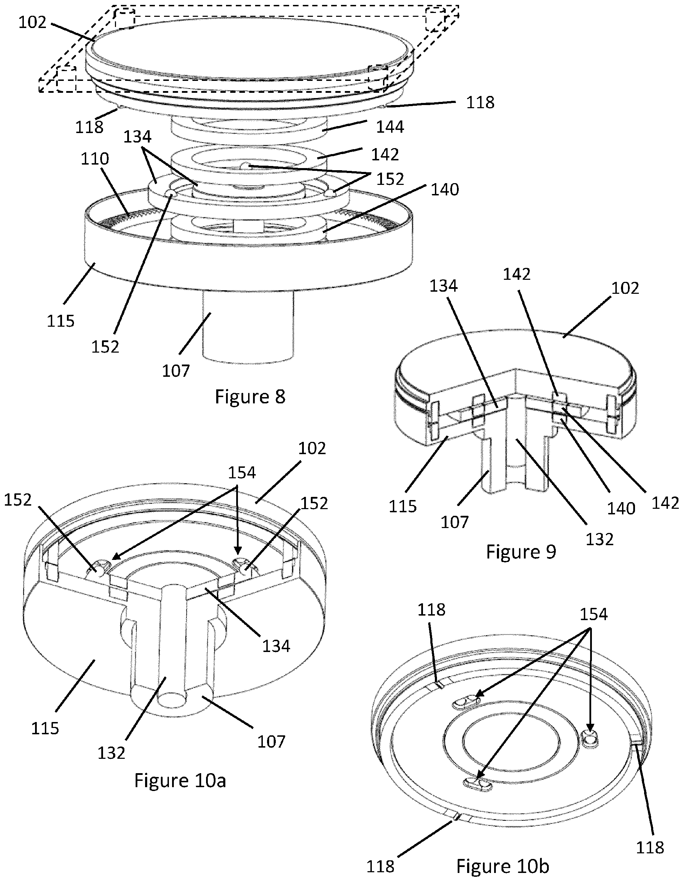

The prop's contact plate 134 and the first member/mounting plate 102 have corresponding engagement elements. In particular, the corresponding engagement elements comprise features which are configured to provide a repeatable, and in particular a kinematic, coupling between the prop's contact plate 134 and the first member/mounting plate 102 when engaged. In the embodiment described, the prop's contact plate 134 comprises three engagement balls 152 located 120° apart from each other, and the first member/mounting plate 102 has three pairs of engagement balls 154, the pairs being located 120° apart from each other (see Figure 10b). Each pair of engagement balls 154 on the first member/mounting plate 102 defines a channel or groove for receiving one of the engagement balls 152 located on the contact plate 134.

As also shown in Figures 3 and 4, a second rotary encoder apparatus is provided, which comprises an annular scale 162 provided on the top face 115 of housing 105 of the second member 104 and first 160 and second 161 (not shown in Figures 4 and 5) readheads provided on the underside of the first member/mounting plate 102. In the embodiment described, the first 160 and second 161 readheads are annularly spaced 120° apart from each other. In the embodiment described, the second rotary encoder apparatus is an incremental optical rotary encoder apparatus. In the particular embodiment described, the second encoder apparatus is a high-resolution encoder which enables the relative position of the first member/mounting plate 102 and the body 105 of the second member 104 to be established within 10nm (nanometres). Its purpose is described in more detail later on in this document.

The unlocking/reorienting/locking process for the first member/mounting plate 102 and the second member 104 will now be described. Figure 3 shows the first member/mounting plate 102 and the second member 104 in a locked state. In the locked state a probe 300 mounted on the probe mount 108 can be held in a steady and well-defined angular position such that it can be used in a measurement operation to inspect an artefact. However, it might be desirable to reorient the probe mounted on the probe mount 108, for example for access reasons. To do so it will be necessary to unlock the first member/mounting plate 102 and the second member 104, cause them to be relatively reoriented, and then lock them together at the new orientation.

Unlocking the first member/mounting plate 102 and the second member 104 involves driving the prop 130 axially along the first axis "D" toward the first member/mounting plate 102. In the described embodiment, this is facilitated by the controller 220 sending an instruction to the articulated head 100 so as to operate the lock motor 190 to drive the lead screw 174 so as to drive the lead screw nut 176 upwards in the Z-dimension (in the orientation shown in Figures 3 and 4). In turn, the lever 170 (which is connected to and so is actuated by the lead screw nut 176) pushes the prop's shaft 132 upwards in the Z-dimension (in the orientation shown in Figures 3 and 4). After a short distance, the engagement balls 152 on the contact plate 134 of the prop 130 will contact and engage the pairs of engagement balls 154 on the first member/mounting plate 102, after which continued driving of the lead screw 174 will cause the lever 170 and lead screw mechanism 172 to push the housing 105 axially downward (via the cylindrical bearing housing 107 to which the lead screw 174 is anchored), thereby causing the housing 105 of the second member 104 and first member/mounting plate 102 to separate. The lead screw 174 is operated so as to separate the second member 104 and first member/mounting plate 102 by a controlled, predefined amount which is sufficient such that the crowned teeth 118 are clear of the teeth 112, but as explained in more detail below, is not too great because it is desirable that the first magnet 140 remains sufficiently close to the second magnet so as to have a reasonable amount of pull on the second magnet 142 even in the unlocked state. Figure 4 illustrates the indexing head 100 in such an unlocked state. In this embodiment, the lock motor 190 of the first axis "D" can be operated independently of the electrically powered lock motor 190' of the second axis "E" such that the second axis "E" can remain locked whilst the first axis "D" is unlocked.

Once the unlocked state has been reached, the lock motor 190 driving the lead screw mechanism 172 is stopped, and the first axis' "D" drive motor 192 which is engaged with the shaft's 132 drive gear 148 is operated in order to effect a change in rotational position of the second member 105 of the articulated head 100. As noted above, in the unlocked state, the prop 130 is engaged with the first member/mounting plate 102 via the engagement balls 152, 154 and so is rotationally fixed with respect thereto (in the unlocked state). Accordingly, when the drive motor 192 which is engaged with the shaft's 132 drive gear 148 is operated, it causes the whole housing 105, 107, 115 of the second member 104 (and all components anchored thereto, which includes the aforesaid motors) to be driven about the shaft 132, and hence causes the whole housing 105, 107, 115 of the second member 104 (and all components anchored thereto) to rotate about the first axis "D".

The relative rotational position of: i) the housing 105, 107, 115 of the second member 104; and ii) the shaft 132 (and hence the first member/mounting plate 102), is known from the first ("primary") encoder apparatus 135. Accordingly, the controller 220 can use the output from the first encoder apparatus 135 to control the motor (not shown) engaged with the shaft's drive gear 148 so bring the first member/mounting plate 102 and second member 104 to a desired relative orientation. As will be understood, the rotational position needs to be controlled to a sufficiently high degree of precision such that when in the new desired relative orientation, the crowned teeth 118 on the second annular member 114 sit opposite the valleys of the teeth 112 on the first annular member/face spline member 110, so that when they are locked together the crowned teeth 118 nestle cleanly between two teeth 112 of the first annular member/face spline member 110.

The process of locking the first member/mounting plate 102 and the second member 104 will now be described. In the described embodiment, this is effected by operating the lock motor 190 to drive the lead screw 174 so as to drive the lead screw nut 176 downwards (in the orientation shown in Figures 3 and 4). This will cause the housing 105 of the second member 104 to be pulled up toward the first member/mounting plate 102 until the crowned teeth 118 on the second annular member 114 engage the teeth 112 of the face spline member 110, after which continued operation of the lock motor 190 will cause the prop 130 to be retracted away from the first member/mounting plate 102, thereby disengaging the engagement balls 152, 154 provided on the contact plate 134 and the first member/mounting plate 102. Accordingly, at the point of disengagement of the engagement balls 152, 154, the first member/mounting plate 102 and the second member 104 are held via the kinematic constraint provided by the six rigid points of contact between the three crowned teeth 118 and the teeth 112 of the first annular member/face spline member 110.

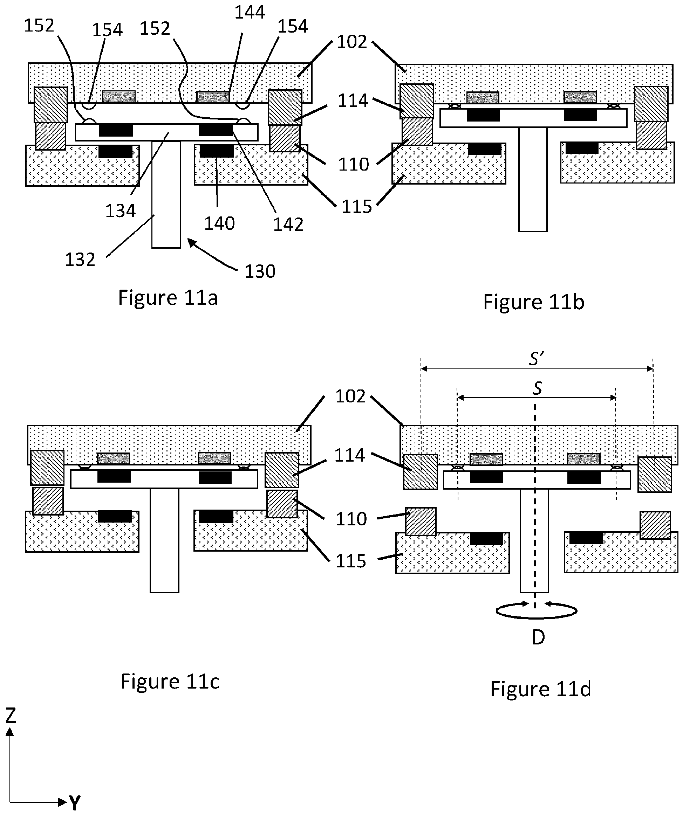

The way in which the first 140, second 142 and third 144 magnets interact with each other will be described with reference to Figures 11a to 11d, which schematically illustrate the prop's shaft 132 and contact plate 134, the second member's top plate 115, the first member/mounting plate 102, the second annular member 114 (which as the three crowned teeth 118), the first annular member/face spline member 110 (which has the continuous series of teeth 112) and the first 140, second 142 and third 144 ring magnets. Figure 11a illustrates the first member/mounting plate 102 and the second member 104 in a locked position; i.e. in which the teeth 112 on the first annular member/face spline member 110 and the teeth 118 on the second annular member 114 are fully engaged. Figure 11b illustrates the first member/mounting plate 102 and the second member 104 in a locked position, but at the point where the prop 130 has been actuated to the point where the engagement balls 152 on the contact plate 134 have engaged the engagement balls 154 on the first member/mounting plate 102 and is about to start separating the teeth 112 on the first annular member/face spline member 110 and the teeth 118 on the second annular member 114. Figure 11c illustrates the first member/mounting plate 102 and the second member 104 in which they have begun to separate, but have not yet reached their fully unlocked configuration. Figure 11d illustrates the first member/mounting plate 102 and the second member 104 in an unlocked position in which in which the teeth 112 on the first annular member/face spline member 110 and the teeth 118 on the second annular member 114 are fully clear of each other such that the first member/mounting plate 102 and the housing 105 of the second member 104 are free to rotate relative to each other about the first axis "D".

In the configuration shown in Figure 11a, the third magnet 144 is attracted to both the second 142 and third 144 magnets, and so thereby pulls the first member/mounting plate 102 toward the prop 130 and the housing 105 of the second member 104. In the embodiment described, the apparatus is configured such that there is a total locking force of approximately 120N between the first member/mounting plate 102 and the second member 104 when in the locked position (which with appropriate head dimensions, in particular the diameters and locations of the indexing arrangement and of the ring magnets, provides a breakout torque of 2Nm). As will be understood, the breakout torque is a moment that can be exerted before the first and second bodies start to peel away from each other. This can be important because the articulated head will often be eccentrically loaded. As will also be understood, the breakout torque is dependent on factors other than the retaining/holding/locking force, such as the diameter of the face spline member 110 or the diameter of the ring of engagement balls 152, 154.

In order to transition to an unlocked state, the prop 130 needs to be moved toward the first member/mounting plate 102. Whilst it would seem that the presence of the first magnet 140 would at least initially increase the work required of the lock motor 190 to do so (compared to if it were not present), it should be noted that the apparatus is configured such that in the locked state shown in Figure 11a, the prop's contact plate 134 is held in a predetermined position which puts the second magnet 142 part-way between the first 140 and third 144 magnets. This ensures that the first magnet's 140 pull on the second magnet 142 is significantly less than it would be if they were to be in contact with each other. Also, the third magnet 144 has a degree of magnetic pull on the second magnet 142. Accordingly, the work/power required to move the second magnet (and hence the contact plate 134) away from the first magnet 140 is significantly less compared to if the first 140 and second 142 magnets were in contact.

In particular, in the embodiment described and shown, the prop's contact plate 134 is held in a predetermined position which puts the second magnet 142 approximately mid-way between the first 140 and third 144 magnets, although such that the second magnet 142 is slightly closer to the first 140 magnet than the third magnet 144. This means that the magnetic forces on the second magnet applied by the first 140 and third 144 magnets is almost (but not quite) balanced. Accordingly, very little work/power is required of the lock motor 190 to move the prop 130 toward the first member/mounting plate 102. Indeed, once the second magnet 142 has reached the mid-way point between the first 140 and third 144 magnets, the magnetic pull of the third magnet 144 on the second magnet 142 will be greater than that of the first magnet 140. As the contact plate 134 progresses toward the first member/mounting plate 102 the magnetic pull of third magnet 144 on the second magnet 142 progressively increases.

When the prop 130 has been moved to the configuration shown in Figure 11b, it is then necessary for the lock motor 190 to pull the teeth 118 on the body 105/115 of the second member 104 away from the teeth 112 on the first member/mounting plate 102. Whilst there is a sufficiently large holding/retaining force (at least 160N) holding the second member 104 on the first member/mounting plate 102 (via the engagement balls 152, 154) at this point, the lock motor 190 needs to exert less than the holding/retaining force because it now only needs to exert sufficient force (which in this embodiment is about 95N) so as to overcome the attractive force between the first magnet's 140 pull on the second 142 and third 144 magnets.

The lock motor 190 continues to drive the prop 130 until the housing 105 of the second member 104 has moved away from the first member/mounting plate 102 by an amount sufficient for the teeth 112 of the first annular member 110 to be clear of the teeth 118 on the second annular member 114, as illustrated in Figure 11d. At this point, the retaining force holding prop 130 and the housing 105 of the second member 104 onto the first member/mounting plate 102 is approximately 160N. A higher retaining force is achieved in the configuration shown in Figure 11d compared to Figure 11a by controlling the gaps between the first 140, second 142 and third 144 magnets. In particular, despite there being a relatively large gap between the first 140 and second 142 magnets in the unlocked state of Figure 11d, there is a relatively small gap between the second 142 and third 144 magnets (compared to the gap between the first 140 and second 142 magnets when in the locked state of Figure 11a) so as to achieve the higher total retaining force. A higher total retaining force is desirable in the unlocked position because the diameters S of the rings of the engagement balls 152, 154 is smaller than the diameters S' of the first 110 and second 114 annular members, which means that they require a higher pulling/retaining force to ensure the same or similar breakout torque of about 2Nm (Newton-Metre).

When in the unlocked state shown in Figure 11d, the first 102 and second 104 members can be relatively rotated about the D axis to a new relative rotational position/orientation. As described above, this involves driving the drive motor 192 (not shown) which engages the shaft's drive gear 148 to cause the body 105 of the second member 104 to rotate around the shaft 132. The output of the first encoder apparatus 135 is used to measure/monitor the relative position of the body 105 of the second member 104 and the shaft 132 (and therefore the first member/contact plate 102, the rotational orientation of which about D is fixed). When the output of the first encoder apparatus 135 indicates that the body 105 of the second member 104 is now at the desired indexed position, the drive motor 192 is stopped, and the first 102 and second 104 members are locked together as described below.

In order to lock the first 102 and second 104 members in their new rotational position/orientation, the lock motor 190 is operated to drive the lead screw mechanism 172 so as to drive the lead screw nut 176 down the lead screw 174. This initially causes the housing 105 of the second member 104 to be pulled up toward the first member/mounting plate 102. As will be understood, very little power is required of the lock motor 190 because the housing 105 of the second member 104 is already being pulled toward the first member/mounting plate 102 by the first 140, second 142 and third magnets 144. This continues until the teeth 112 of the first annular member 110 engage the teeth 118 of the second annular member 114 (shown in Figure 11b) at which point the lock motor 190 and lead screw mechanism 172 has to start pushing against the magnetic forces so as to separate the props' contact plate 134 from the first member/mounting plate 102. However, at this point, the first magnet 140 is much closer to the second magnet 142 and so it exerts a relatively large force on it. Indeed, at this point the net force on the second magnet 142 at the state illustrated in Figure 11b is only 95 N. Accordingly, the lock motor 190 and lead screw mechanism 172 is assisted by the magnets and can much more easily pull the second magnet 142 (and hence the prop 130) away from the third magnet 144 (and hence the first member/mounting plate 102) until the contact plate 134 reaches the predetermined axial/Z position shown in Figure 11a.

It is known from the output of the first rotary encoder 135 what indexed rotational position the first member/mounting plate 102 and the second member 104 are at. It can also be useful to check that the first member/mounting plate 102 and the second member 104 have properly locked together. This could be achieved in various ways, for instance by using one or more sensors that can check the separation between the opposing faces of the first member/mounting plate 102 and the second body 105, and if the separation is greater than a fixed threshold amount (which is the same for all indexed positions), then an corrective action can be taken (e.g. an error/warning can be reported and/or action taken to try to remedy the problem such as by attempting an unlock/relock operation, for instance from a different position/direction, and/or demand recalibration).

In the present embodiment described, the second rotary encoder apparatus is configured to measure and provide information about the relative spatial configuration of first and second bodies in their locked state. In particular, the outputs of the first 160 and second 161 readheads of the second rotary encoder apparatus are used to ensure that the first member/mounting plate 102 and second member 104 have properly locked together. In particular, when locked, the outputs of the first 160 and second 161 readheads are passed to electronics 400 within the readhead, which, for example, comprises a processing device 402 (e.g. a CPU (Central Processor Unit), FPGA (Field Programmable Gate Array), or ASIC (Application Specific Integrated Circuit), or the like) and memory 404. The processing device 402 compares the values received from the first 160 and second 161 readheads to values stored in a lookup table which resides in the memory 404. In particular, the processing device 402 compares the outputs of the first 160 and second 161 readheads to determine whether their outputs are substantially the same as those values stored in the look-up table's element(s) associated with the particular indexed position. If the output of either or both of the first 160 or second 161 readhead is substantially different to the values stored in the lookup table (e.g. the difference is greater than 100nm), then this could be an indication that something is wrong; in particular that the teeth 112/118 of the first member/mounting plate 102 and the second body 105 have not properly locked together/intermeshed and therefore are not seated in substantially the same position as when the values stored in the look-up table associated with that particular indexed position was obtained. This could be, for instance, because: the teeth 112/118 have crashed; there is debris between the teeth 112/118; there is excessive wear between the teeth/118, etc. Accordingly, the apparatus (e.g. the controller) can then take corrective action in such a circumstance. Such correction action could include: causing the first member/mounting plate 102 and the second body 105 to unlock and relock again; outputting a warning signal to an operator and/or other process; halting the current operation, etc.

As mentioned above, the second rotary encoder apparatus is an incremental encoder apparatus. The outputs of the first 160 and second 161 readheads therefore do not comprise any absolute position information. Accordingly, rather than comparing absolute position information, the processor 402 compares relative (position) data/information. In particular, for example, as will be understood by those skilled in the art of position measurement encoders, the scale of an incremental position encoder typically comprises an array of regularly spaced features, arranged at a particular spacing, or "period" (which in the described embodiment is 20µm, but as will be understood scales of other periods can be used). The readhead can read the features (e.g. optically, magnetically, inductively, depending on the technology used) and the readhead, or its output, is normally used to "count" the relative position of the readhead and scale as they move relative to each other. It is also well known that the signals received by the readhead and/or output by the readhead can be interpolated to provide a measurement of the relative position of the readhead and scale to a resolution much finer than the actual period of the scale. Such an interpolated reading is often referred to as a "phase" reading. For example, typically quadrature (e.g. SIN and COS) signals are generated from the scale signals and/or are output by a readhead. Such quadrature (e.g. SIN and COS) signals can be interpolated to provide such a "phase" reading. In the embodiment described, it is the interpolated or "phase" reading which is used by the processor 402 and compared with a pre-stored "phase" reading stored in the lookup table's element associated with the particular value.

Accordingly, it is not necessary for the first 160 or second 161 readheads to be reading the scale 162 as the first 104 member/mounting plate 102 and the second body 105 move relative to each other as the indexed position is changed (although, if the configuration allows, this can be done). Rather, a single reading can be taken and output by the first 160 and second 161 readheads when the lock operation has completed, and the interpolated or "phase" value of those reading can be compared with the pre-stored "phase" readings stored in the lookup table's element associated with the particular value. If either or both of the phase readings differ by more than a predetermined amount (e.g. 100nm as per the above example), then corrective action could be taken as described above.

Accordingly, the data elements in the look-up table could be said to be a "phase-signature" for each of the calibration indexed positions, and if the values of the phase readings of the first 160 and second (not shown readheads) differ sufficiently from the look-up tables' phase-signature for the given indexed position, then corrective action could be taken.

The lookup table is populated before the articulated head 100 is used for a measuring operation (e.g. could be populated during a calibration procedure). This can comprise the steps of, locking the first 104 member/mounting plate 102 and the second body 105 relative to each other in a given indexed position, and recording/storing the phase readings of the first 160 and second (not shown) readheads in an element/data cell associated with the given indexed position. This is then repeated for each of the articulated head's indexed positions (or at least for the indexed positions in which the head is to be used and for which such verification is desired).

Optionally, the lookup table could be updated over time so as to allow for small degrees of drift over time. This could happen continuously or at regular intervals. This could be done as part of a dedicated calibration process, or it could be done during measurement operations. For example, each time the first member/mounting plate 102 and the second body 105 successfully lock together at any given indexed position (e.g. they pass the above described 100nm test), the phase reading output by the first 160 and second (not shown) readheads could be stored in the lookup table in place of the previous value.

As will be understood, if desired, the look-up table could be replaced with a function which describes the values in the look-up table. However, a look-up table can be preferred due to its ease of generation and because it is easy to keep it up to date.

As will be understood, rather than two readheads, a single readhead could be used, or more than two readheads could be used. It is not necessary for multiple readheads to be placed 120° apart from each other around the scale 162. However, it has been found that providing multiple readheads which are not diametrically opposite each other (i.e. not at 180°) is particularly advantageous because it can provide information about the spatial configuration of the first member/mounting plate 102 and the second body 105 in multiple dimensions. On the one hand providing them at substantially/approximately 90° to each other around the first axis can be preferred for reasons of efficiency and optimum performance, but for the reasons described above, placing them substantially on the same radial line as the engagement teeth 118 can also be preferred for different reasons. Accordingly, depending on the particular circumstances, when the engagement teeth are not at 90° to each other (such as is the described embodiments where they are placed 120° apart from each other) the benefits of placing each of the readheads on the same radial line as a respective engagement tooth might override the benefit of placing the readheads at 90° to each other.

The second rotary encoder apparatus described above is an incremental encoder, but as will be understood, it could instead by an absolute encoder apparatus.

In the present embodiment described, the first readhead 160 (and the optional second readhead 161) could be referred to as a "verification" sensor, because it is used to check/verify that the first member/mounting plate 102 and the second body 105 have locked together properly.

In the above-described embodiment, an optical rotary encoder apparatus, is used to determine the spatial configuration of the first 102 and second 104 members when in their locked state. However, this need not necessarily by the case. Other types of non-contact sensor could be used, such as, for example, a position sensitive device (PSD) mounted on the first member 102, the output of which is dependent on the relative spatial position of the first member/mounting plate 102 and the second body 105 when locked together. In this case, a lookup table could be populated during a calibration stage so as to record the output of the PSD for each of the indexed positions of interest (e.g. which could be all indexed positions or only those which are intended to be used during a subsequent measurement operation). Subsequently, in use, when the first member/mounting plate 102 and the second body 105 are locked in particular indexed position, the PSD can provide an output to the processor 402 which is then compared to the value stored in the particular element of the lookup table stored in memory 404 which is associated with the particular indexed position. If the output of the PSD differs by more than a threshold amount, then corrective action can be taken.

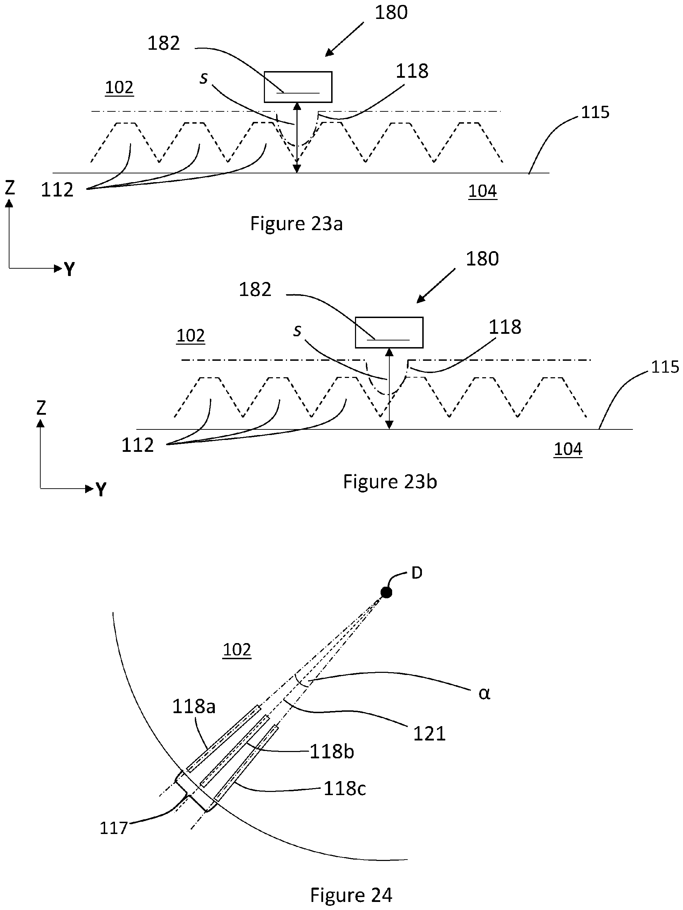

In an alternative embodiment, the (so-called "verification") non-contact sensor is configured to measure just the relative height/separations of the first and second bodies (e.g. via a capacitive sensor, or an inductive sensor as explained in more detail below in connection with Figure 23). Advantageously, when the first and second bodies are locked together, the output of the height sensor is compared to a pre-stored value in the element of the look-up table which is associated with the particular indexed position at which the first and second bodies are locked together.

As will be understood, further variations and alternative embodiments of the articulated joint described above are possible. For instance, one or two of the first 140, second 142 and third 144 magnets could be replaced with magnetically attractable (e.g. ferrous) material. This would provide a similar, albeit weaker, effect to that providing three magnets. Accordingly, the one or two magnets that remain would need to be stronger, and therefore bigger, which could also (depending on the configuration) mean that a larger peak motor force is needed.

In another similar embodiment, the first magnet 140 is located elsewhere. For example, the first magnet 140 could be located at/toward the end of the shaft 132 which is distal to the contact plate 134. Again, this would provide a similar effect in terms of aiding the lock motor 190 during the locking/unlocking processes, but because the first magnet 140 is located far away from the first member/mounting plate 102 it would provide little if any retaining force, and so it would be necessary to provide bigger/stronger second 142 and/or third 144 magnets.

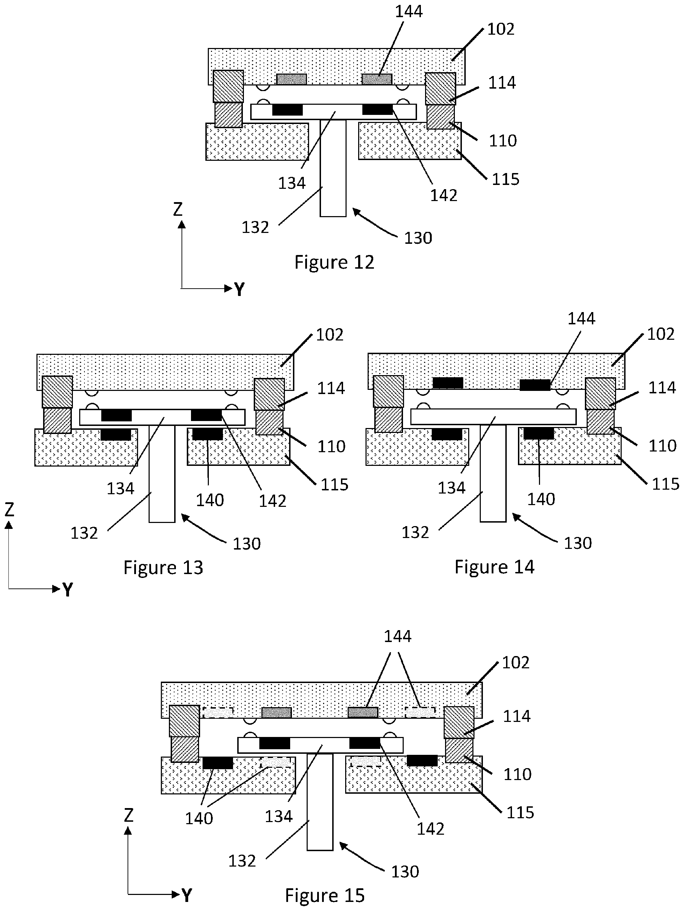

Figure 12 schematically illustrates an alternative embodiment in which the first magnet 140 is omitted such that the second member 104 is magnetically retained on the first member/mounting plate 102 by just a pair of magnets, i.e. the third magnet 144 provided on the first member/mounting plate 102 and the second magnet 142 provided on the contact plate 134 of the prop 132. Whilst this is possible, the second 142 and third 144 magnets need to provide all the locking/retaining force themselves, and so either one or both of them will need to be much stronger than the triple magnet arrangement described above, which then will require the lock motor 190 to work much harder during the locking process when the prop's contact plate 134 is to be pulled away from the first member/mounting plate 102 (i.e. at the transition from Figure 11b to Figure 11a). Also, without the first magnet 140, all forces which retain the housing 105 of the second member 104 to the first member/mounting plate 102 have to be carried through the prop 130, lever 170, and lead screw mechanism 172 and associated bearings. This would require those parts to be bigger/stronger and would ideally need a motor which prevents back-driving.

Figure 13 illustrates another alternative embodiment in which the third magnet 144 is omitted such that the second member 104 is magnetically retained on the first member/mounting plate 102 by just a pair of magnets, i.e. the first magnet 140 provided on the housing's top plate 115 and the second magnet 142 provided on the prop's contact plate 134. In this case, the first member/mounting plate 102 (at least a part thereof) has to be made from material capable of being attracted by a magnet (e.g. ferrous material). A disadvantage of this embodiment is that the holding/retaining and breakout torques are lower compared to if the third magnet was present (and so bigger/stronger first 140 and/or second 142 magnets are required if the same holding/retaining and breakout torques are desired).

Figure 14 illustrates another alternative embodiment in which the second magnet 144 is omitted such that the second member 104 is magnetically retained on the first member/mounting plate 102 by just a pair of magnets, i.e. the first magnet 140 provided on the housing's top plate 115 and the third magnet 144 provided on the first member/mounting plate 102. A disadvantage of this embodiment is that the holding/retaining and breakout torques are lower compared to if the second magnet was present (and so bigger/stronger first 140 and/or third 144 magnets are required if the same holding/retaining and breakout torques are desired). In this embodiment, the contact plate 134 could comprise material capable of being attracted by a magnet (e.g. ferrous material) so as to aid magnetic retention, but this is not as good as the contact plate 134 comprising a magnet.

Figure 15 illustrates another alternative embodiment. In this embodiment, it is illustrated that it is not essential for the magnets to be stacked directly such that they are in-line with each other. For example, Figure 15 illustrates alternative locations of the first 140 and/or third 144 magnets 140, (e.g. they could be located radially further out than the second 142 magnet).

It is also possible for magnets to be used in an arrangement in which they repel each other in order to provide the necessary locking/retaining forces.

However, it has been found that the described arrangement of having at least three, in-line, stacked magnets, all arranged to attract each other, as per the embodiment of Figures 1 to 11, can be advantageous. In particular, it has been found to significantly reduce the work require of the lock motor 190 which controls the linear position of the prop 130 when it is in its locked state, as well as can help to reduce the peak work required of the lock motor 190 during the locking action. Not only can this reduce the size of the lock motor 190 required and help to keep the articulated head compact and light, but it can also reduce the heat output of the lock motor 190 (which in turn can improve the metrological performance of the articulated head by reducing/avoiding thermal distortions). Indeed, whilst the magnets of the embodiment of Figures 1 to 11 can be configured to provide 120N of pull force when locked and 160N when unlocked (so as to provide a 2Nm breakout torque), due to the three, in-line, stacked magnets, the lock motor 190 only needs to produce a peak 95N of force.

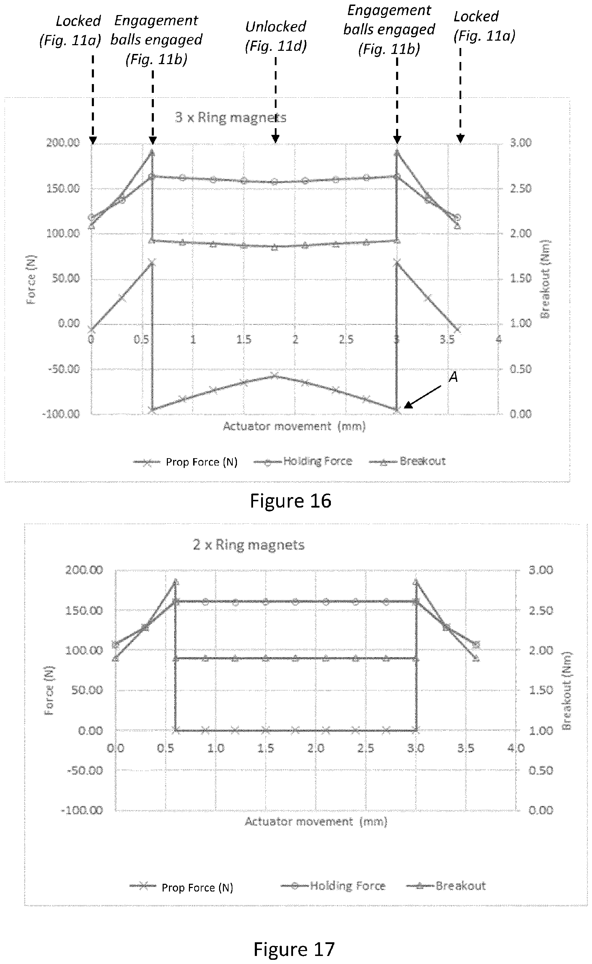

Figure 16 is a graph illustrating the prop force and holding force for the three-magnet embodiment of Figures 3, 4 and 11 and Figure 17 is a graph illustrating the prop force and holding force for the two magnet embodiment of Figure 12 (which is equivalent in every aspect apart from that the first magnet 140 has been omitted). The holding force (also referring to above as the "retaining force" or "locking force") is net force which pulls the first member 102 and second member 104 together. The prop force is the net magnetic force experienced by/exerted on the prop 130. Accordingly, this is the magnetic force that has to be overcome in order to hold the prop 130 at position. Such force can be overcome by a combination of the force exerted on the prop by the lock motor 190 and any friction in the gearing/motor/prop system (as will be understood, if friction in the gearing/motor/prop system is excluded, then the prop force is proportional to the work required of the lock motor 190; e.g. proportional to the motor current).

As shown in Figure 16, when the first member/mounting plate 102 and second member 104 are in their locked state, the prop force is very low (less than 10N). Accordingly, the force required to hold the prop 130 in position is low. Indeed, it is so low that depending on the gearing/motor/prop system, friction might be sufficient to hold the prop 130 in position (e.g. if it is highly resistant to back-driving). Accordingly, very little to zero motor power is required to hold the prop 130 in position. Furthermore, as described above, the configuration of Figures 1 to 11, is arranged such that in the locked position the prop 130 is positioned such that the magnetic force biasing the second magnet 142 toward the first magnet 140 is greater than the magnetic force biasing the second magnet 142 toward the third magnet 144. Accordingly, even if the lock motor 190 controlling the linear position of the prop 130 was turned off, and even if friction is not sufficient to hold the prop 130 in place against the magnetic bias, all that will happen is that the prop 130 will retract further until the contact plate 134 abuts the housing top face 115, which will have no detrimental impact on the engagement of the teeth 112, 118 of the first member/mounting plate 102 and second member 104.

This is to be contrasted with the prop force experienced by the prop 130 in the two-magnet embodiment of Figure 12. As illustrated in Figure 17, when in the locked state (which is the stated illustrated in Figure 12), there is a significant net magnetic force which is biasing the second 142 magnet toward the third magnet 144 (about 110N). Accordingly, in the locked position, significant work/power is required of the lock motor 190 to hold the prop 130 in position. Indeed, the prop force is so great that even the friction of the lead-screw mechanism which is highly resistant to back-driving is not sufficient to overcome the prop force and so if the lock motor 190 was powered off the prop 130 would creep toward the first member/mounting plate 102 until they come into contact which would then interfere with the engagement of the teeth 112, 118 of the first member/mounting plate 102 and second member 104.

As can be seen from the graphs in Figures 16 and 17, there is some disadvantage to the three-magnet embodiment, in that there is significant prop force when the prop 130 and the first member/mounting plate 102 are engaged. Accordingly, significant motor work/power is required to push against the prop force so as to separate the first member/mounting plate 102 and the second body 104 (e.g. between the states shown in Figure 11b and 11d), and also to hold the first member/mounting plate 102 and the second body 104 in their unlocked state (e.g. in the state shown in Figure 11d). In contrast, with the two-magnet embodiment of Figure 12, there is zero prop force so very little motor work/power is required to separate the first member/mounting plate 102 and the second body 104 once the prop 130 and the first member/mounting plate 102 have engaged.

However, under normal circumstances, the amount of time that the articulated head spends in its unlocked state is significantly less than the amount of time that the articulated head spends in its locked state, and so the benefit of the three-magnet embodiment needing significantly less (or even zero) motor power in the locked state outweighs the cost of needing to work harder in the unlocked state.

The three-magnet embodiment of Figures 1 to 11 also has the benefit that the peak motor work/power required of the lock motor 190 is less than that of the two-magnet embodiment. In the two-magnet embodiment, the greatest amount of work required of the lock motor 190 is when it is re-locking the first member/mounting plate 102 and the second body 104, and in particular the peak motor work/power is required at the point the teeth 112, 118 of the first member/mounting plate 102 and the second body 104 engage and the lock motor 190 is trying to separate the prop's contact plate 134 and the first member/mounting plate 102. At this point, the lock motor 190 has to overcome the attractive pull of second 142 and third 144 magnets all by itself (as well as overcome any friction in the gearing/motor/prop system), and so needs to exert a force greater than 150N. In contrast, with the three-magnet embodiment, at the point the teeth 112, 118 of the first member/mounting plate 102 and the second body 104 engage and the lock motor 190 is trying to separate the prop's contact plate 134 and the first member/mounting plate 102 during a locking operation (i.e. at point represented by Figure 11b), the first 140 and second 142 magnet have been brought closer together (compared to when they were fully unlocked as shown in Figure 11d). Accordingly, the first magnet 140 is close enough to the second magnet 142 to exert a significant amount of pull on the second magnet 142 and so assists the lock motor 190 in separating the separate the prop's contact plate 134 and the first member/mounting plate 102. This results in the lock motor 190 only needing to exert about 95N to effect such separation (see point A in Figure 16).

As will be understood, alternative means could be provided for retaining the first member/mounting plate 102 and second member 104 and/or for retaining the third member 106/106' and second member 104. For instance, mechanical springs could be used to pull the housing 105 of the second member 104 and the first member/mounting plate 102 together and/or mechanical springs could be used to pull the third member 106/106' and second member 104 together. In another embodiment, one or more mechanical rods (such as those described in US7213344) could be used to pull the housing 105 of the second member 104 and the first member/mounting plate 102 together (i.e. so as to be able to lock/unlock the D axis), and/or mechanical rods (again, such as those described in US7213344) could be used to pull the third member 106/106' and the housing 105 of the second member 104 together (i.e. so as to be able to lock/unlock the E axis).

However, it has been found that magnets can be preferred over such mechanical solutions due to possible issues with hysteresis caused by friction (magnets can avoid the need for any moving parts between the first member/mounting plate 102 and the second member 104, and/or between the third member 106/106' and second member 104).

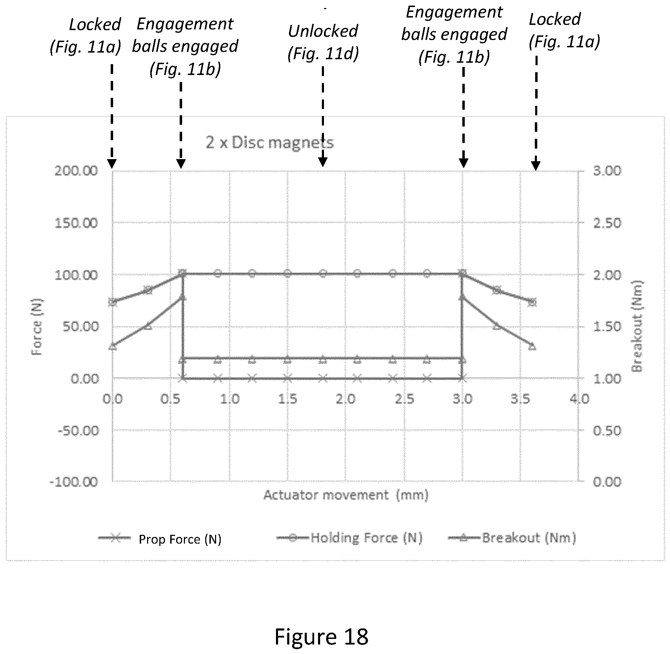

Advantageously, the above embodiment relies on the use of ring magnets. It is possible that one or more of the ring magnets could be replaced by disc magnets, but, somewhat counterintuitively, the inventors have identified that ring magnets have a substantially different force/distance profile compared to disc magnets which can be significantly advantageous in the present situation (and in particular ring magnets appear to provide a more efficient design for a given surface area compared to disc magnets). Indeed, it has been found that in this configuration, ring magnets can provide a much greater force (around 50% more) than a disc magnet of the same outer diameter and depth (measured orthogonal to the diameter of the ring). Figure 18 is a graph illustrating the prop force and breakout torque for a two disc-magnet embodiment, which is equivalent in every aspect to that shown in Figure 12 apart from that the second 142 and third 144 magnets are disc magnets instead of ring (wherein the outer-diameter of the disc magnets are the same as the outer-diameter of the ring magnets). As shown, the prop force, and crucially the breakout torque, is significantly less than the equivalent ring-magnet embodiment.

This finding has enabled them to provide the articulated head with a very high retaining/locking force which in turn enables higher loads/higher moments to be carried by the articulated head before the magnetic coupling fails. For example, it might be desirable to carry very heavy probes such as camera/video probes and/or it might be desirable to carry very long stylus which provide a large moment on the magnetic coupling, especially during probing. The need for such large forces has in the past pushed designers of articulated heads which are suitable for carrying large loads/moments, away from the use of magnets. For example, the articulated heads disclosed in US7263780 and US9494403 use mechanical rods to provide the locking force. However, the inventors found that the use of ring magnets can provide a suitably large retaining load without needing physically large magnets and therefore can be fitted appropriately into an articulated head which is to be mounted onto a positioning apparatus such as a CMM.

As an alternative to continuous ring magnets, a series of small disc magnets arranged in a ring shape can provide advantages over a single disc magnet having the same diameter as the ring shape, but it has been found that a continuous ring provides the most efficient design (for a given surface area).

As described above, the planar teeth 112 of the first annular member/face spline member 110 and the crowned teeth 118 of the second annular member 114 provide for stable and repeatable positioning of the first member/mounting plate 102 and the second member 104. When in the locked state, the only physical/mechanical constraints between the first member/face spline member 102 and the second member 104 are the points of contact between planar teeth 112 of the first annular member/face spline member 110 and the crowned teeth 118 of the second annular member 114. It is a particular advantage of this configuration that at each of the indexed positions, the second member 104 is constrained in all six degrees of freedom with respect to the first member/mounting plate 102 by the six points of contact provided by the crowned teeth 118 of the second annular member 114 and the planar teeth 112 of the first annular member/face spline member 110, thereby providing a kinematic constraint. This is true for each of the possible indexed positions. This provides for maximum positional repeatability of a probe 300 mounted on the articulated head 100 at each indexed position. It is also advantageous that the face spline member 110 and second annular member 114 have the dual function of being both indexing elements and retaining elements.

As can be seen in Figures 3, 4 and 24 a safety catch 136 or "pin" is provided. The safety catch 136 is provided merely to act as a safety mechanism to prevent complete detachment of the first 102 and second 104 members should the magnetic retaining mechanism fail (e.g. due to overloading of the second member 104, for instance due to a crash). One end of the safety catch 136 is secured to the prop's contact plate 134 and the other "head" end sits loose within a void 138 in the first member/mounting plate 102. Due to it sitting loose with a void in the first member/mounting plate 102, it does not act as a constraint between the first member/mounting plate 102 and the prop 130/the second member 104 (and therefore does not interfere with the above described kinematic coupling of the first member/mounting plate 102 and the second member 104 when in the locked configuration, nor interfere with the kinematic coupling of the first member/mounting plate 102 and the prop 130 when in the unlocked configuration). However, the safety catch 136 has an enlarged head member 137 which in the event of a failure of the magnetic coupling between the second 142 and third 144 magnetic rings, will engage a ledge 139 in the void, thereby preventing further separation of the first member/mounting plate 102 and the second member 104.

In the embodiments described above, the face spline member 110 is provided on the articulated head's second member 104, and the crowned teeth 118 are provided on the first member/mounting plate 102. However, this need not necessarily be the case and they could be provided the other way around.

In the embodiments described above, the first member/mounting plate 102 and second member 104 are magnetically retained, via an arrangement of magnets which has meant that it is not necessary to use a mechanical means (e.g. arms/levers) for pulling and holding the first member/mounting plate 102 and the second member 104 together. Accordingly, when in the locked state, the only mechanical constraint between the first member/mounting plate 102 and second member 104 is provided by the teeth of the face spline member 110 and the teeth of the second annular member 114. Therefore, when in the locked configuration, the prop 130 is decoupled from the first member/mounting plate 102 such that the prop 130 does not interfere with the above-described kinematic coupling of the first member/mounting plate 102 and the second member 104. However, this need not necessarily be the case. For instance, in other embodiments, a mechanical push/pull lever arm mechanism could be provided, wherein one end of the arm is encapsulated within a bearing of the first member/mounting plate 102 and the other end of the arm is encapsulated within a bearing of the second member 104.

In accordance with the present invention, the first 160 and second 161 readheads are provided on the first member 102; i.e. on the member having the crowned teeth 118 which are located at three discrete, annularly-spaced locations around the axis of rotation. This has been found to be particularly advantageous and, as explained in the following passages, can help to improve the reliability of the information provided by the first 160 and second 161 readheads.

The original designs for the articulated head had the non-contact ("verification") sensors (e.g. the first 160 and second 161 readheads) provided on the second member 104, i.e. on the member on which the continuous series of tapered teeth was provided. However, a problem was identified in that it was found that the relationship between the position information provided by the first 160 and second 161 readheads and the actual relative spatial configuration of the first 102 and second 104 members was affected by changes in temperature. In other words, even if the teeth 112/118 of the first member/mounting plate 102 and the second body 105 have actually seated at substantially the same position as when the values stored in the look-up table associated with that indexed position were obtained, if the current temperature of the articulated head is different to that at the time at which the values stored in the look-up table associated with that indexed position were obtained, it was found that the first 102 and/or second 104 readheads were providing readings which indicated that the teeth 112/118 of the first member/mounting plate 102 and the second body 105 have not seated at substantially the same position as when the values stored in the look-up table associated with that indexed position were obtained. Furthermore, it was found that this temperature related effect was difficult to predict, and in particular varied from one indexed position to another. Such adverse information from the readheads 102, 104 can lead to the following two issues: i) the above described "corrective action" being taken unnecessarily, and ii) "correction action" not being taken when it should be (e.g. because the teeth 112/118 haven't actually seated properly and therefore they are seated in a different relative position, but the thermal effect cancels-out such difference).

The inventors identified that the unpredictability of the above-described temperature related effect could be significantly reduced if the readheads were instead provided on the member which has the engagement features 117 located at discrete annularly-spaced locations 116. It is thought that this is because the positional relationship of the first 160 (and second 161) readheads and the engagement features 117 on first member 102 is the same regardless of the indexed position, and therefore any temperature related effect could be repeatable and therefore can be calibrated/error-mapped.

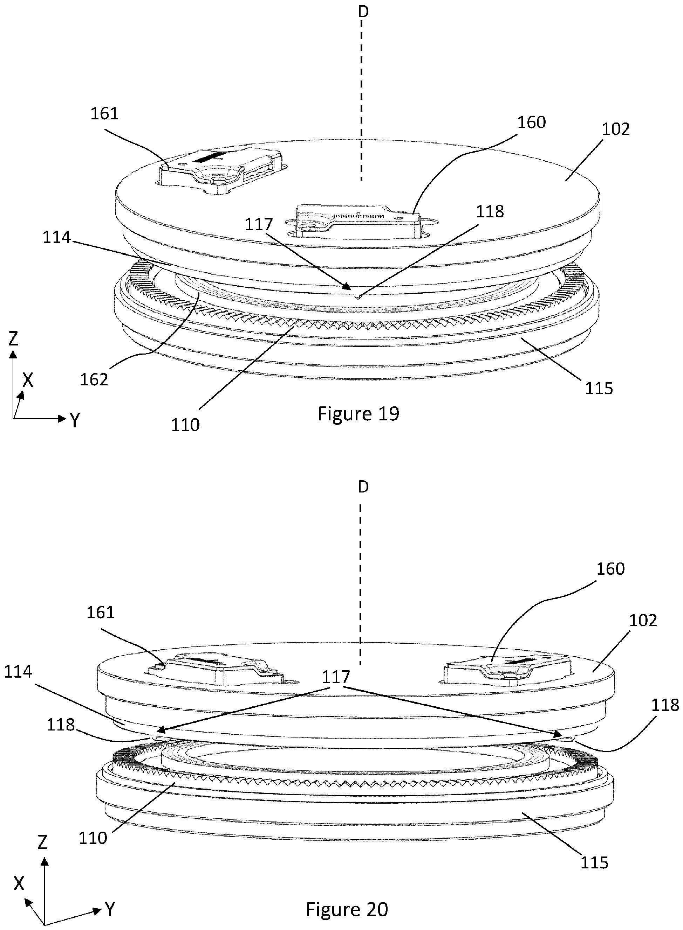

Furthermore, the inventors identified that the above-described temperature related effect could be substantially eliminated by placing the readhead on the same radial line as one of the engagement features 117 on the first member 102, or on a radial line close-to the radial line on which one of the engagement features 117 lies. The currently described embodiment is configured such that the first readhead 160 is located on the same radial line 119 as one of the engagement features 117 of the first member 102 and such that the second readhead 161 is located on the same radial line 121 as another engagement feature 117 of the first member 102. This is most clearly shown in Figures 19 to 21.

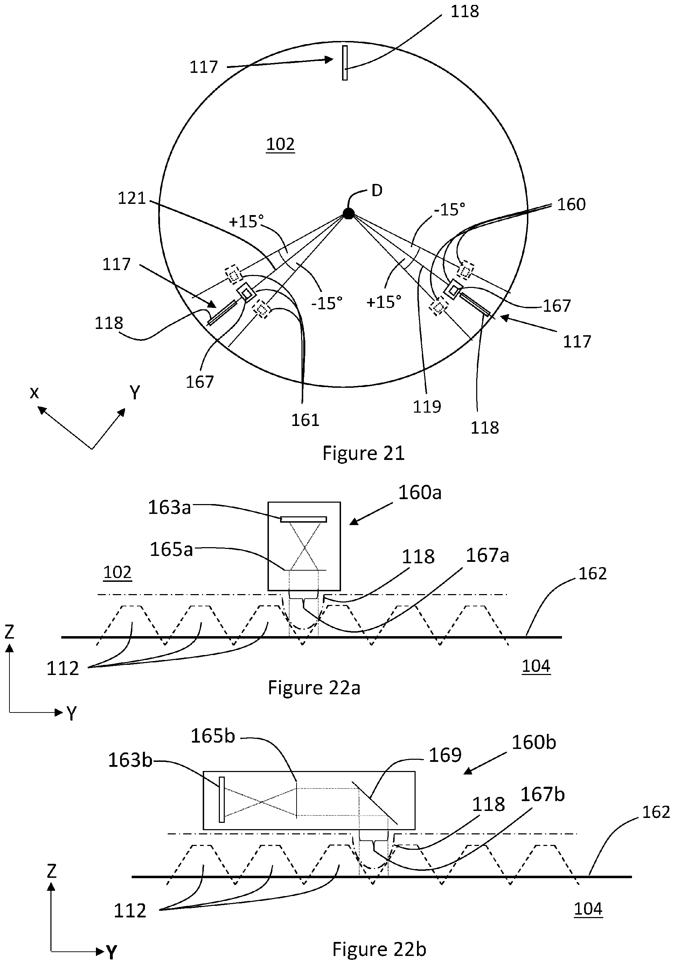

As will be understood, what is important here is the position of the readhead's *sensing window*/*region* with respect to the radial line 119/121 on which the engagement feature 117 lies. With reference to Figure 22a and 22b there are shown first 160a and second 160b different optical implementations of the first readhead 160, wherein their sensors 163a/163b and optical components 165a/165b (which could comprise, for example one or more lenses and/or diffraction gratings) for forming an optical signal on the sensor are schematically illustrated.

As shown in Figure 22a, the sensor 163a of the readhead 160a is positioned such that it lies on the same radial line 119 as one of the engagement features 117 on the first member 102. As shown in Figure 22b, the readhead 160b is nominally optically the same as that of Figure 22a, except that a mirror 169 is used to fold the optical scheme such that the sensor 163b is positioned off to the side, which can be beneficial for minimising the height of the readhead, but results in the sensor 163b being positioned a long way away from the radial line 119 of said engagement feature 117. However, the impact of any changes in temperature on their readings will be substantially the same because the angle between: i) the radial on which their *sensing windows*/*regions* 167a, 167b are located; and ii) the radial line on which said tooth 118 is located are the same (and in the embodiments shown, such angle is substantially 0° and so the readings of both of the readheads 160a, 160b will be substantially unaffected by any changes in temperature).

Whilst optimum performance can be achieved by locating the readhead's sensing windows/region on the same radial line 119/121 as that on which the engagement feature 117lies (i.e. such that the angle between: i) the radial line on which their sensing windows 167a, 167b are located; and ii) the radial line on which said engagement feature 117is located, is 0°), this need not necessarily be the case. As mentioned above, there are benefits to having the readhead mounted on the member which has the engagement features 117located at discrete annularly-spaced locations (in this embodiment on member 102) regardless of its position with respect to the engagement features 117. Nevertheless, it has been found that the closer the readhead's sensing window 167 is to the radial line 119/121 on which an engagement feature 117 lies, the smaller the above-described temperature related effect is. In particular, the inventors consider that locating the readhead such that its sensing window 167 lies on a radial line which is within +/-15° of the radial line 119/121 of the nearest engagement feature 117 (as illustrated in Figure 21) should sufficiently minimise the above-described temperature related effect (e.g. to the extent that any calibration/error-mapping of the temperature related effect should be unnecessary). The magnitude of the above-described temperature related effect is reduced the closer the readhead's sensing window 167 is to the radial line 119/121 of the engagement feature 117, and therefore it can be particularly preferred that the angle between: i) the radial line on which the readhead's sensing windows 167 is located; and ii) the radial line 119/121 on which said engagement feature 117is located, is not more than +/-5°, more preferably not more than +/-1°.

In the above-described embodiment both the first 160 and second 161 readheads are provided such that the angle between: i) the radial line on which its sensing window 167 is located; and ii) the radial line 119/121 on which its nearest engagement feature 117 is located, is the same for both readheads (and in particular is 0° for both readheads), but as will be understood this need not necessarily be the case. For instance, one of the readheads could be arranged such that the angle between i) the radial line on which its sensing window 167 is located; and ii) the radial line 119/121 on which its nearest engagement feature 117is located, is 0°, and the other readhead could be arranged such that the angle between i) the radial line on which its sensing window 167 is located; and ii) the radial line 119/121 on which its nearest engagement feature 117 is located, is 5°.

Furthermore, as will be understood (and as described above) it is not necessary that two readheads are provided; one readhead is sufficient, but two readheads can be advantageous.

In the embodiments described above, the engagement feature 117 at each of said locations 116 comprises a single tooth 118 only (and accordingly, the radial line 119/121 of the engagement feature 117 can be the same as the radial line of such a single tooth 118). However, this need not necessarily be the case, and an engagement feature 117 could comprise, for example, multiple teeth, in other words a "group" of teeth, e.g. two, three or four teeth. This could help to spread the load between the first 102 and second 104 members at each engagement location, although it can be to the detriment of the repeatability of the coupling. The teeth of a group of teeth of an engagement feature 117 could be arranged to engage consecutive teeth 112 of the face spline member 110, or they could be spaced to engage non-consecutive teeth 112. In those embodiments in which an engagement feature 117 comprises two teeth, those two teeth could be configured to engage opposing sides of the same tooth 112 on the second member 104.

In the event an engagement feature 117 comprises a group of teeth, the radial line of the engagement feature can comprise the radial line that falls mid-way between the first and last teeth in the group of teeth of an engagement feature. Such an example is illustrated in Figure 24, wherein an engagement feature 117 comprises a group of three teeth 118a, 118b, 118c. As shown, the radial line 121 of the engagement feature is the radial line that lies mid-way between the first and last teeth 118, 118c in the group. In this embodiment, the radial line 121 happens to be coincident with a tooth of the engagement feature 117, namely the middle tooth 118b, but this need not necessarily be the case. For example, if an engagement feature 117 comprises a group of teeth comprising two teeth only (e.g. 118a and 118c), then the radial line of such an engagement feature will not be coincident with either of those teeth, but instead will lie between said two teeth.

Whilst it is possible for an engagement feature to comprise multiple teeth, in such a case it can be preferred that the angle subtended by an arc defined by the first and last teeth in a group teeth of an engagement feature is not greater than 25°. Again, this is illustrated in Figure 24 which shows the angle α subtended by an arc defined by the first 118a and last 118c teeth in the group of teeth of the engagement feature 117.

It can be preferred that the indexing arrangement is configured to provide a kinematic coupling between the first 102 and second 104 members. Optionally, the engagement features can be configured such that there is, in total, only six points of contact between the first 102 and second 104 members when locked together at an indexed position. This could be achieved by providing at each of the three discrete locations 116 only one tooth on the first member 102 which contacts facing sides of opposing teeth 112 on the second member 104 (as per the shown embodiment), or in another embodiment this could be achieved by providing at each of the three discrete locations 116 two teeth on the first member which contact opposing sides of a single tooth 112 on the second member (e.g. a bit like the spherical balls and cylindrical rollers embodiments described in WO2006/079794 or US5185936).

As mentioned above, the present invention is not limited to optical sensors. For instance, an inductive or capacitive sensor could be used. Figures 23a and 23b illustrate a non-contact ("verification") sensor 180 having an inductive sensor 182 which is provided on the first member 102 and arranged to sense a region of the top face 115 of the second member 104. The output of the inductive sensor 182 varies depending on the separation '*s*' between the inductive sensor 182 and said top face 115. As illustrated in Figures 23a and 23b, the separation '*s*' varies depending on the rest position of the tooth/teeth 118 of the first member 102 relative to the teeth 112 of the second member 104. Accordingly, the output of the inductive sensor 182 can be used in the same way as that described above in connection with the optical encoder embodiment, e.g. by comparing the output of the inductive sensor 182 to a prestored value to verify that the first 102 and second 104 members have locked together at a given index position in substantially the same spatial configuration as at an earlier point in time (e.g. during a calibration stage).

The material of at least those parts of the first 102 and second 104 members that, at each indexed position, mechanically link the readheads 160/161 on the first member 102 and the scale 162 on the second member, and thereby dictate the relative spatial configuration thereof, has a CTE of at least 2ppm/°C. In the embodiment described, the first member 102 and the top face 115 are made from metal, in particular an aluminium alloy having a CTE of 24ppm/°C, and the first 110 and second 114 annular members (and the teeth 112, 118 provided thereon) are made from metal, in particular a stainless steel having a CTE of 10ppm/°C. Accordingly, those parts of the first 102 and second 104 members that, at each indexed position, mechanically link the readheads 160/161 on the first member 102 and the scale 162 on the second member, and thereby dictate the relative spatial configuration thereof, have CTEs greater than 2ppm/°C . Other suitable materials include ceramics (e.g. Tungsten carbide, zirconia, silicon nitride).

The unlocking and locking of the first axis "D" is described above in detail. In the embodiment described the locking/unlocking mechanism and indexing arrangement of the second axis "E" (i.e. of the second member 104 and third member 106/106') is substantially the same as the first axis "D", and so the above description for the first axis "D" also applies to the second axis "E". Accordingly, in summary, similar to the first axis "D" described above, the controller 220 can send an instruction to the articulated head 100 so as to operate the lock motor 190' of the second axis "E" so as to drive a lead screw (not shown) to thereby drive a lead screw nut 176' horizontally in the X-dimension (in the orientation shown in Figure 25). In turn, the lever 170' (which is connected to and so it actuated by the lead screw nut 176') pushes the prop's shaft 132 upwards in the Z-dimension (in the orientation shown in Figures 3 and 4) After a short distance, the engagement balls 152' on the contact plate 134' of the prop 130' will contact and engage the pairs of engagement balls 154' on the third member 106/106', after which continued driving of the lead screw 174' will cause the lever 170' and lead screw mechanism 172' to push the third member 106/106' axially outwards, thereby causing the housing 105 of the second member 104 and third member 106/106' to separate. The lead screw 174' is operated so as to separate the second member 104 and third member 106/106' by a controlled, predefined amount which is sufficient such that the crowned teeth 118' of the third member 106/106' are clear of the mating teeth 112' on the second member 104, but as explained above in connection with the first axis "D", is not too great because it is desirable that the first magnet 140' remains sufficiently close to the second magnet 142' so as to have a reasonable amount of pull on the second magnet 142' even in the unlocked state. Figure 25 illustrates the second axis "E" of the articulated head 100 in such an unlocked state.

Once the unlocked state has been reached, the lock motor 190' driving the lead screw mechanism 172' is stopped, and the second axis' "E" electrically powered drive motor 192' which is engaged with the shaft's 132' drive gear 148' is operated in order to effect a change in rotational position of the third member 106/106' relative to the second member 105. In the unlocked state, the prop 130' is engaged with the third member 106/106' via the engagement balls 152', 154' and so is rotationally fixed with respect thereto (in the unlocked state). Accordingly, when the second axis' "E" drive motor 192' which is engaged with the shaft's 132' drive gear 148' is operated, it causes the third member 106/106' to be driven about the axis of rotation E defined by the shaft 132'.

The relative rotational position of: i) the housing 105, 107, 115 of the second member 104; and ii) the second axis' "E" shaft 132' (and hence the third member 106/106'), is known from the second axis' "E" first ("primary") encoder apparatus 135'. Accordingly, the controller 220 can use the output from the second axis' "E" first encoder apparatus 135' to control the second axis' "E" drive motor 192' engaged with the shaft's drive gear 148' so bring the second member 104 and the third member 106/106' to a desired relative orientation. As will be understood, the rotational position needs to be controlled to a sufficiently high degree of precision such that when in the new desired relative orientation, the crowned teeth 118' on the third member 106/106' sit opposite the valleys of the teeth 112 on the second axis' "E" annular member/face spline member 110', so that when they are locked together the crowned teeth 118' nestle cleanly between two teeth 112' of the second axis' "E" annular member/face spline member 110'.

As with the first axis "D", first 140', second 142' and third 144' magnets are provided on the housing 105 of the second member 104, prop 130' and third member 106/106' of the second axis "E" and so benefit from the magnetically assisted unlocking and locking arrangement of the first axis "D". Also, the indexing arrangement of the second axis "E" is similar to that of the first axis "D", in that it comprises a first annular member 110' having a continuous series of tapered teeth which are substantially radially extending (e.g. it is in the form of a "face spline member") and a second annular member 114' which has three crowned teeth configured to engage a subset of the continuous series of teeth provided on the face spline member 110' at three equiangularly-spaced locations. Furthermore, as with the first axis "D", a second rotary encoder apparatus is provided for the second axis "E", which comprises an annular scale 162' provided on the housing 105 of the second member 104, and first 160' and second (not shown) readheads provided on the third member 106/106', and can be used in the same manner as that described above in connection with the first axis "D" for verifying/checking that the second member 104 and the third member 106/106' have properly locked together.

In the above-described embodiments, separate lock motors are provided for the first axis "D" and second axis "E". However, this need not necessarily be the case. For example, one "lock" motor could be provided, and means for selecting which of the axes it causes to separate could be provided. For example, a system of gears, e.g. a gear-box, could be provided and configured such that the motor can be selected so as to control the locking/unlocking of just the first axis "D", or selected so as to control the locking/unlocking of just the second axis "E", or selected so as to control the locking/unlocking of both the first axis "D" and second axis "E" together. However, it can be preferred to use separate motors for simplicity and because if just one motor were provided it would need to be sufficiently large/powerful enough so as to cope with unlocking both axes at the same time when required. Similarly, in the above-described embodiments, separate drive motors are provided for the first axis "D" and second axis "E". However, this need not necessarily be the case. For example, one "drive" motor could be provided, and means (e.g. a gear-box) for selecting which of the axes it causes to drive could be provided). Again, separate drive motors can be preferred.

The above describes a two-axis articulated head. However, as will be understood, the invention is not limited to a two axis articulated heads. For example, the articulated head could be a three-axis articulated head wherein there is provided a fourth member coupled to the third member such that its orientation relative to the third member about a third axis can be changed (e.g. changed between, and locked at one of, a plurality of predefined indexable orientations). In such a case, the above-described features can be applicable to the third and fourth members, as appropriate. The first, second and third axes could be mutually orthogonal. In such a case, the fourth member can comprise the tool mount for receiving a tool. In such a case, the first, second and third axes of rotation could be mutually orthogonal. The invention is also applicable to one-axis devices, such as a rotary table having one axis of rotation.

## Claims

1. An apparatus comprising first and second relatively reorientable members and an indexer arrangement which is configured to provide a plurality of angularly indexed lockable positions of the first and second members about a first axis, in which the indexer arrangement comprises:
i) a series of features provided on the first member, said series of features extending annularly around the first axis; and
ii) on the second member, at at least three discrete locations annularly-spaced around the first axis, an engagement feature is provided which is configured to intermesh with a subset of said features on the first member when in the locked state thereby providing, at each indexed position, a stable relative rest position of the first and second members;
in which the apparatus further comprises at least a first non-contact sensor mounted to the second member, the first non-contact sensor being configured to sense a region on the first member and thereby provide a signal dependent on the spatial configuration of the first and second members when in their locked state.

2. An apparatus as claimed in claim 1, in which the material of at least those parts of the first and second members that, at each indexed position, mechanically link said first non-contact sensor on the second member and said region on the first member, and thereby dictate the relative spatial configuration thereof, has a CTE of at least 2ppm/°C.

3. An apparatus as claimed in claim 1 or 2, wherein said first non-contact sensor is positioned such that the radial line on which its sensing window resides is within +/-15° of the radial line on which a first of the engagement features of the second member resides.

4. An apparatus as claimed in claim 3, wherein said first non-contact sensor is positioned such that the radial line on which its sensing window resides is within +/-1° of the radial line on which said first engagement feature resides.

5. An apparatus as claimed in any preceding claim, wherein the region on the first member that is sensed by the first non-contact sensor comprises a scale member comprising a series of features which said first non-contact sensor can read to determine the relative position thereof.

6. An apparatus as claimed in any preceding claim, configured such that in the event of the first and second members locking together at an indexed position the first non-contact sensor is used to establish information about the state of engagement of the first and second bodies.

7. An apparatus as claimed in claim 6, configured to react in a predetermined manner depending on the determined state of engagement of the first and second members.

8. An apparatus as claimed in claim 7, in which said reacting in a predetermined manner comprises causing the first and second members to unlock, and optionally relock at the same indexed position.

9. An apparatus as claimed in any preceding claim, comprising a second non-contact sensor mounted to the second member, being configured to sense a region on the first member at a different annular position about the first axis to that sensed by the first non-contact sensor, and thereby provide a signal dependent on the spatial configuration of the first and second members when in their locked state.

10. An apparatus as claimed in claim 9, in which said second non-contact sensor is positioned such that the radial line on which its sensing window resides is within +/-15° of the radial line on which a second of the engagement features of the second member resides.

11. An apparatus as claimed in any preceding claim, configured such that at each indexed position the engagement features on the second member are configured to intermesh with a subset of said features on the first member when in the locked state thereby providing a kinematic coupling thereof.
